(19) Europäisches Patentamt
European Patent Office
Office européen des brevets

(11) **EP 3 679 779 B1**

(12) **FASCICULE DE BREVET EUROPEEN**

(45) Date de publication et mention
de la délivrance du brevet:
**22.11.2023 Bulletin 2023/47**

(21) Numéro de dépôt: **19217583.4**

(22) Date de dépôt: **18.12.2019**

(51) Classification Internationale des Brevets (IPC):
***A01C 21/00*** *(2006.01)*

(52) Classification Coopérative des Brevets (CPC):
**A01C 21/00**

(54) **MÉTHODE DE FERTILISATION AZOTOBACTÉRIENNE (AZB)**

DÜNGUNGSMETHODE VON STICKSTOFFBAKTERIEN

NITROGEN-FIXING BACTERIA (AZB) FERTILISATION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.01.2019 FR 1900152**
**13.02.2019 FR 1901429**
**13.02.2019 FR 1901431**

(43) Date de publication de la demande:
**15.07.2020 Bulletin 2020/29**

(73) Titulaire: **Polyor SARL**
**54000 Nancy (FR)**

(72) Inventeur: **CLAUDE, Pierre-Philippe**
**54000 Nancy (FR)**

(56) Documents cités:
**EP-A1- 3 417 691     US-A- 5 755 058**

**Description**

L'alimentation en azote (N), phosphore (P) et soufre (S) des azotobactéries *résidusphériques* en *fertilisation azotobactérienne* (AZB ; Claude et Fillion, EP3335536) est problématique. Par exemple, la dénitrification génératrice de protoxyde d'azote ($N_2O$) - puissant gaz à effet de serre, augmente selon le taux de fertilisation azotée (Del Grosso et al. 2000, Fang et al. 2015), notamment en situations d'anaérobiose lors de la saturation aqueuse de la couche arable. Plus paradoxalement, ces pertes de $N_2O$ tendent à augmenter selon l'indice de nutrition azotée, ou encore lorsque les reliquats d'azote minéral post-récolte à l'automne sont faible comme c'est le cas en fertilisation azotobactérienne (Claude et Fillion 2004 et EP3335536). En effet, il existe une dénitrification aérobique en sols arables non saturées attribuable à l'existence de régions néanmoins anaérobiques au coeur des macro-agrégats (Ebrahimi et Or 2015) ; cela explique en partie pourquoi en présence de $pO_2$ faibles mais non nuls il y a quand même parfois un peu de dénitrification. Cette dénitrification micro-aérobique partiellement régie par l'opéron napA est aussi parfois attribuable à la présence d'importantes quantités de substrats carbonés (Colloff et al. 2008, Chèneby et al. 2010) comme c'est le cas après l'enfouissement de résidus de culture cellulosiques (Wakelin et al. 2007). Cette augmentation des émissions de $N_2O$ attribuable à la valorisation in situ des résidus de culture va nécessairement causer problème en fertilisation azotobactérienne.

Puisque l'efficacité d'AZB dépends aussi de l'alimentation en phosphore (P) des azotobactéries résidusphériques, l'application d'engrais P directement aux résidus de culture a été proposée (EP3120680). Cet apport de P aux azotobactéries nécessite cependant un passage dédié du pulvérisateur. A titre d'alternative, l'apport d'engrais P au feuillage (dPfol) afin d'augmenter ultimement la teneur en P des résidus de culture (Prcs) tend à réduire les teneurs en acides phénoliques des résidus de culture (PHErcs ; Jones et Hartley 1999, Juszczuk et al. 2004). Or, PHErcs contribue à l'efficacité de la fertilisation azotobactérienne en favorisant la migration chimiotaxique des azotobactéries vers la résidusphère (EP3417691). Cette augmentation de Prcs affectera aussi la résistance de la plante au phytopathogènes (Wilcoxon 1980, Rempelos et al. 2018) et augmentera le risque phytosanitaire. L'enrichissement en P des parties aériennes à l'aide de dPfol renforcées est donc a priori doublement contre indiquée en en fertilisation azotobactérienne.

Enfin, la nitrogenase (Nif ; PDB 1 M34) est riche en S. Son ratio C sur S (rCS) est inférieur à 100 (86), tandis que celui d'autres enzymes impliquées dans le cycle de l'azote (eg. Nap, Nas, Nar et Amo ; PDB 1OGY, 4WJY, 3H4F et 5YB7, respectivement) est d'au moins 120 et celui des enzymes glycolytiques (eg. PDB 5GNY, 1L1Y, 4IM4, 2R8Z et 1PW1) en moyenne de 160. Le rCS des résidus de culture est lui souvent supérieur à 400, et celui de la microflore microbienne du sol d'environ de 300 (Erikson 2005, Niknahad-Gharmakher et al. 2012, Stewart et al. 1966, Barrow 1960 et McGill et Cole 1981). Cette relative richesse - et donc besoin, en S de de Nif est dû à la présence de cofacteurs molybdène - fer pourvus de S (Djurdjevic et al. 2017, Rubio et Ludden 2005). Bien que ce S provienne de diverses matières organiques et - surtout, d'engrais S sulfatés, il y a cependant un décalage entre les cinétiques de libération du S de tels sels sulfatés et de formation susdits cofacteurs enzymatiques riche en S des azotobactéries résidsphériques (Dos Santos et al. 2007). Le développement de ces populations accélère qu'une fois les reliquats d'azote minéral immobilisés par l'ensemble de la microflore tellurique. Cela peut prendre plusieurs jours, voire une semaine post enfouissement des résidus de culture, les susdites azotobactéries ayant été à ce stade laissées pour compte.

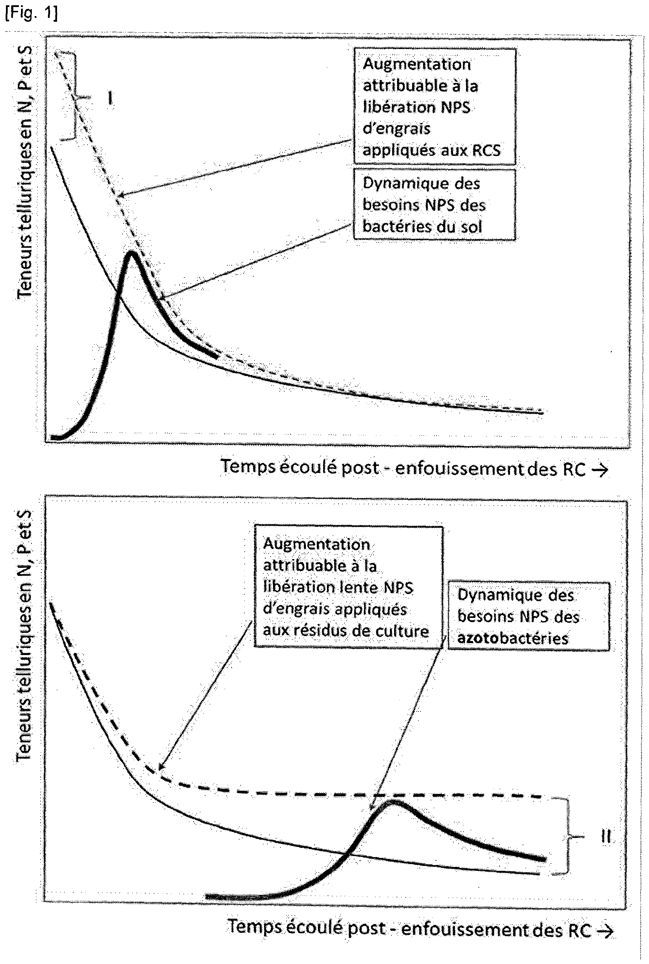

La dénitrification aérobique et *micro-nitrique* en présence de résidus de culture pailleux est donc trop souvent associée à des émissions de protoxyde d'azote. De plus, l'enrichissement en P des biomasses aériennes précurseurs de la résidusphère risque de réduire les teneurs en composés phénoliques du feuillage avec des conséquences phytosanitaire et - paradoxalement, sur le fonctionnement de la fertilisation azotobactérienne. Enfin, et plus généralement, les cinétiques de libérations de N, P et S des engrais minéraux conventionnels sont trop rapides par rapport aux besoins des azotobactéries résidusphériques impliquées dans la fertilisation azotobactérienne (Figure 1).

[Fig. 1] : Principe. La dynamique de l'azote (N), phosphore (P) t soufre (S) minéraux en fonction du temps après l'incorporation des résidus de culture (RC) déterminera si les espèces bactériennes ou azotobactériennes prédominent. L'immobilisation microbienne suite à l'enfouissement des résidus de cultures cellulosiques diminuera les teneurs en N, P et S des minéraux. Ajouter directement aux résidus de culture de simples sels de nitrates, de phosphates ou de sels d'engrais sulfatés augmentera immédiatement les teneurs minérales en N, P et S du sol (cf. Figure 1 - I) en les rendant disponibles à la microflore bactérienne - mais pas nécessairement azoto-bactérienne. Compte tenu des faibles quantités d'N pouvant être appliquées à l'automne, ces teneurs en N, P et S minérales atteindront dans 5 à 8 jours des niveaux comparables à ceux du témoin sans applications de N, P et S. Pour avantager les azotobactéries, la libération de l'N, P et S doit donc être retardée à l'aide d'engrais dits à libération lente/contrôlée ou encore par l'enrichissement préalable en N, P et S des biomasses aérienne précurseurs des résidus de culture laissés au sol. Par exemple, ici l'application de triazones, thiosulfates et/ou polyphosphates plus complexes retardera la libération de ces nutriments et de leur oxydation et augmentera (cf. Figure 1 - II) les teneurs en N, P, S des résidus de culture après la phase initiale d'incorporation dans le sol des résidus de culture. Cette libération retardée, plus lente et contrôlée de N, P et S minéraux sera ainsi plus synchronisée avec les besoins en N, P et S des azotobactéries résidusphériques contribuant ainsi à l'optimisation de d'AZB.

L'invention permet de mieux synchroniser la libération des nitrates, phosphates et sulfates avec les besoins en N, P et S de la *diazotrophie* non symbiotique dans la résidusphère. Pour ce faire, il faudra augmenter les doses d'engrais N, P et S normalement prescrites en fertilisation foliaire et en retarder leurs applications à des stades de croissance (BBCH) plus avancés que ceux normalement recommandés en fertilisation foliaire. Ces engrais N, P et S sont avantageusement constitués de molécules libérant lentement N, P et S faiblement bactéricides ou bactériostatiques. Ces quantités majorées d'engrais foliaire appliquées plus tardivement réduisent appréciablement les *coefficients apparents d'utilisation* (CAU) du N, P et S apportées au profit d'une certaine *incrustation histologique* de ces éléments. Il est aussi comme de raison possible d'appliquer de tels engrais N, P et S directement aux résidus de culture au sol.

Les documents EP3417691 et US5755058 décrivent différentes méthodes de fertilisation du sol. Or, l'état de la technique ne permet pas aujourd'hui d'assurer que ces stades BBCH d'application préconisés soient nécessairement optimaux en termes de CAU. Le développement expérimental de la présente invention devra tenir compte de cette imperfection de l'état de l'art et tenter d'y remédier. On s'appuiera donc pour le moment sur les stades BBCH optimaux les plus vraisemblables sur la base des informations techniques et réglementaires disponibles. *Idem* pour ce qui est de doses-hectare d'engrais N, P et S ; il n'est pas toujours aisé de savoir si ces recommandations affichées par les pétitionnaires ont été établit de manière à optimiser les susdits CAU. De plus, les diverses formes et formulations de ces engrais impliquent des doses-hectare parfois assez divergentes. Cela dit, de manière générale, les doses-hectare d'engrais N en application foliaire sont plus importantes et plus tardives (BBCH plus avancés) que celles d'engrais P et S. A noter que les applications foliaires très tardives d'engrais N (i.e. post floraison) comprennent nécessairement une forme quelconque *d'agent azoto-nutritionnel* (ANN ; cf. EP2223586).

Il est donc question d'une méthode de fertilisation azotobactérienne (AZB) au sens de Claude et Fillion 2004 et EP3335536 permettant de réduire les émissions telluriques de protoxyde d'azote et d'enrichir en P et en S les résidus de cultures cellulosiques au sol afin d'en favoriser l'utilisation entant que substrats carbonés en présence de grandes cultures céréalières, de colza et/ou de cultures intermédiaires pièges à nitrates (cipan) implantées après l'enfouissement de ces résidus de culture comprenant des engrais minéraux ou organiques d'N (azote) de P (phosphore) et/ou de S (soufre) soit appliqués pré-récolte aux parties aériennes d'une culture agronomique toujours sur-pieds produisant les résidus de culture cellulosiques laissés au sol, ou encore post-récolte directement auxdits résidus de culture cellulosiques laissés au sol par la susdite culture agronomique, caractérisée et en ce que ;

- les doses-hectare des engrais N, P et S lorsqu'appliquées pré-récolte aux parties aériennes de la culture agronomique toujours sur-pieds produisant ces résidus de culture cellulosiques laissés au sol post récolte sont supérieures à celles normalement préconisées, et les stades de croissance (BBCH) au moment de leurs applications plus avancés, que ceux normalement préconisés en fertilisation foliaire associés à des coefficients apparents d'utilisation (CAU) optimaux de ces engrais N, P et S,

et aussi et en ce que ;

- les doses hectare des engrais N, P et S lorsqu'appliquées directement aux résidus de culture laissés au sol post-récolte de la culture agronomique les produisant sont égales à ou encore jusqu'à 50% plus ou moins importantes par rapport à celles appliquées ci-dessus pré-récolte qu'aux parties aériennes toujours sur-pieds des cultures agronomiques produisant ces résidus de culture.

Les susdits engrais N, P et S ainsi appliqués pré-récolte aux parties aériennes de la culture agronomique toujours sur-pieds produisant lesdits résidus de culture sont soit de simples sels minéraux de N, P et/ou S normalement utilisés en fertilisation foliaire ou encore des engrais N, P et/ou S plus complexes faiblement bactériostatiques à libération lente libérant progressivement l'N, le P et le S minéral sous forme de nitrates, phosphates et sulfates respectivement, et ainsi capables d'alimenter en N, P et S les azotobactéries résidusphériques en proximité desdits résidus de culture cellulosiques au sol après leur enfouissement en surface de sols arables et impliquées dans ladite fertilisation azotobactérienne. Lorsque les susdits engrais N, P et S appliqués post-récolte directement aux résidus de culture laissés au sol ils sont cependant nécessairement plus complexes à libération lente et que faiblement bactériostatiques libérant progressivement au sens entendu ci-dessus l'N, le P et le S minéral sous forme de nitrates, phosphates et sulfates, respectivement.

Par simples sels minéraux on entend que ceux-ci ne comportent qu'une molécule anionique fertilisante, à savoir ici un groupement N, P ou S, par complément cationique ou fonctionnel selon sa valence, i.e. le nombre maximal de liaisons covalentes ou ioniques que le cation ou groupe fonctionnel complémentaire peut former. Par analogie, des engrais N, P et S plus complexes peuvent donc avoir plus d'un groupement N, P ou S par complément cationique ou fonctionnel comme c'est le cas ici pour les triazones ($C_3H_7N_3O$), les polyphosphates d'ammonium (($NH_4)_3H_2P_3O_{10}$)) et les thiosulfate (eg. $K_2O_3S_2$).

Les susdits engrais N, P et S sont composés ;

- de triazones (CAS 7098-14-8) uréiques plus complexes et plus généralement mais qu'en fertilisation foliaire d'azote minéral sous la forme plus simple de nitrate d'ammonium, nitrate de potassium, nitrate de calcium, d'urée et/ou de phosphate d'ammonium,

- de polyphosphates plus complexes, d'ammonium par exemple (CAS 68333-79-9) et plus généralement mais qu'en fertilisation foliaire de phosphore sous forme plus simple de composés phosphatés solubles à titre d'engrais foliaire tel que des sels phosphatés d'ammonium, de sodium, de potassium et de magnésium, et

- de thiosulfates plus complexes, spécifiquement des sels thiosulfates choisis parmi un groupe comprenant des thiosulfates de calcium (CAS 10124-41-1), de potassium (CAS 1264198-56-2) et/ou de magnésium (CAS 13446-30-5) à l'exclusion notable dans le cas d'applications directement aux résidus de culture cellulosiques laissés au sol du thiosulfate d'ammonium (CAS 7783-18-8), mais aussi plus généralement mais qu'en fertilisation foliaire de simples sels sulfatés de calcium, potassium, magnésium et d'ammonium.

Les doses-hectare des susdits engrais minéraux ou organiques d'N de P et/ou de S appliqués pré-récolte aux parties aériennes toujours sur pieds de la culture agronomique produisant et laissant ainsi des résidus de culture cellulosiques au sol sont _supérieures_ de 5 à 50%, plus particulièrement de 10 à 33%, voire avantageusement de 25% par rapport à celles normalement préconisées en fertilisation foliaire afin de d'optimiser leurs coefficients apparents d'utilisation (CAU). Ces doses-hectares normalement préconisées en fertilisation foliaire afin d'optimiser les CAU sont de l'ordre de 5 à 6 unités (kg/ha) d'azote (N), d'au plus 1 unité de phosphore (P) et de 2 à 3 unités de soufre (S) pour ce qui est des sels d'ammonium ($NH_4$) et nitrate ($NO_3$), de phosphate ($PO_4$) et de sulfate ($SO_4$), respectivement, et de l'ordre de 4 unités d'azote (N), d'au plus 1 unités de phosphore (P) et de 2 à 4 unités de soufre (S) pour ce qui est des sels triazones, polyphosphates et thiosulfates, respectivement.

Les stades de croissance (BBCH) sont eux _plus avancés_ de 5 à 33%, plus particulièrement de 10 à 25% et avantageusement de 20% par rapport à ceux normalement préconisés en fertilisation foliaire N, P et S afin de d'optimiser leurs coefficients apparents d'utilisation (CAU). Ces stades de croissance BBCH normalement préconisés pour l'application des doses-hectare en fertilisation foliaire sont de l'ordre de 35 à 46, de 23 à 35 et de 23 à 35 pour ce qui est des sels d'ammonium ($NH_4$) et nitrate ($NO_3$), de phosphate ($PO_4$) et de sulfate ($SO_4$), respectivement, et de l'ordre de 23 à 49, de 25 à 39 et de 23 à 37 pour ce qui est des sels triazones, polyphosphates et thiosulfates, respectivement.

La grande culture agronomique semée à la suite de (suivant) l'enfouissement desdits résidus de culture laissés au sol et bénéficiant ainsi de ladite fertilisation azotobactérienne AZB est choisie parmi un groupe comprenant des cultures d'hivers céréalières, de colza ou de lin, tandis que la cipan est non-_Fabaceae._ La culture agronomique produisant ces résidus de culture cellulosique laissés au sol est choisie parmi un groupe comprenant des cultures céréalières, de colza ou de tournesol ou encore de maïs-grain ou de sorgho.

La réalisation de l'invention comporte aussi divers indicateurs élémentaires de l'efficacité d'une méthode de fertilisation azotobactérienne (AZB). Un premier indicateur, iDEN, indique l'abondance génomique in situ des opérons NarG (cNarG) impliqués dans la dénitrification anaérobie, NapA (cNapA) impliqué dans la dénitrification aérobie micronitrique, et NifH (cNifH) révélateur du niveau de diazotrophie, et cela en fonction de la milimolarité nitrique ($mM-NO_3$) dans la résidusphère par superposition graphique de fonctions cNarG, cNapA et cNifH selon mM-NOs de manière à mettre en évidence une zone d'intersection stochastique de ces trois dynamiques indiquant le degré d'atténuation relative de cNIF selon mM-NOs lorsque cNarG est commensurable voir comparable à cNapA. Un deuxième indicateur élémentaire de la sorte, iHRP, comprend un estimé des teneurs en P (phosphore) et PHE (acides phénoliques) des résidus de culture au sol - Prcs et PHErcs respectivement, iHRP étant la somme des valeurs relatives de Prcs et PHErcs par rapport à leurs maximums ponctuels sur la parcelle agricole en question.

Enfin, un troisième indicateur, iTHS, comprend une estimation du taux de libération du S phyto-disponible à travers le temps ainsi qu'une estimation du niveau d'expression génomique des complexes enzymatiques impliqués dans le cycle de l'azote résidusphérique et est obtenu par soustraction du produit de la concentration du S phyto-disponible à un moment donné et du niveau d'expression des gènes de l'opéron impliqués dans la biosynthèse du complexe nitrogenase (nifH ; cNIF) de la somme des produits de la concentration du S phyto-disponible au même moment donné et des gènes des opérons narG (cNAR) et napA (cNAR) impliqués respectivement dans la biosynthèse des complexes nitrate réductase membranaire et périplasmique, soit formellement ; iTHS = {_cNIF_ * SO4 - (_cNAR ∗ SO4_ + _cNAP ∗ SO4_)}.

La réalisation de l'invention altérera la cinétique de libération des espèces N, P et S minérales dans la résidusphère favorisant ainsi l'alimentation élémentaire des azotobactéries au dépend des bactéries non diazotrophes (Figure 1). Pour en démontrer la faisabilité, il faut dans un premier temps illustrer stochastiquement comment ces cinétiques de libération de l'azote et du soufre peuvent maintenant augmenter l'expression des gènes (opérons) régissant l'activité de la nitrogenase (nifH) et réduire celles des opérons impliqués dans l'émission de protoxyde d'azote, notamment l'opéron napA. Il faut aussi illustrer comment l'enrichissement en P des résidus de culture a priori favorable aux azotobactéries (EP3120680) peut se faire sans nuire à leur migration chimio-taxique tributaire des teneurs en acides phénoliques des résidus de culture après enfouissement (EP3417691).

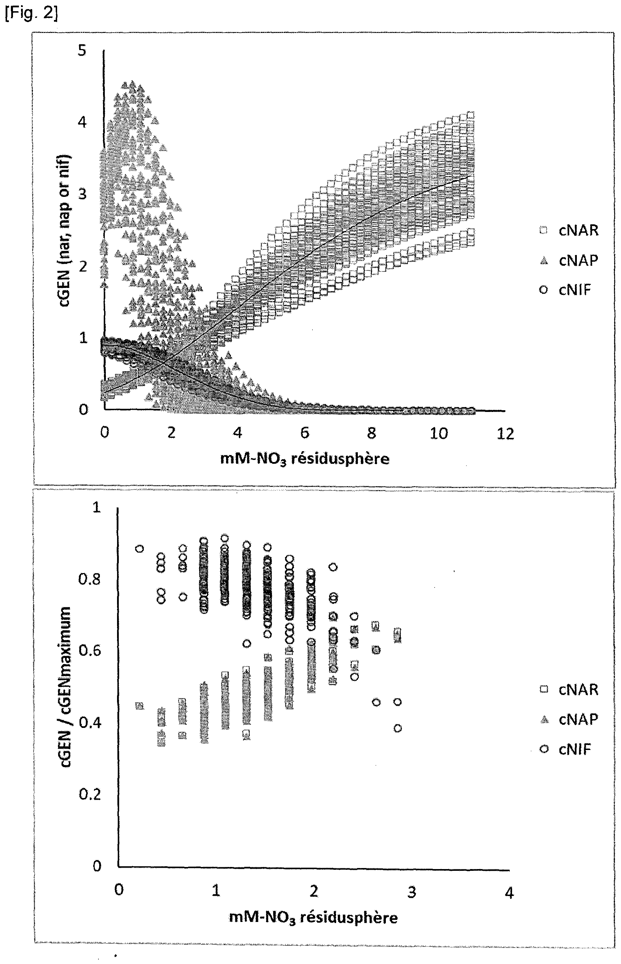

<u>Mode de réalisation pour l'azote (N)</u> - *Figure 2.* L'invention consiste à apporter de petites voir « *micro*doses » d'N-fertilisant aux résidus de culture au sol ou encore de manière préemptive pré-récolte à leurs précurseurs toujours sur-pieds. Ces microdoses d'N ne chamboulerons pas le bilan N de la parcelle et sont donc recevables réglementairement. Bien qu'elle implique la désactivation partielle d'un process de dénitrification (napA), la réalisation de l'invention ne nécessite pas une modification du degré d'aération de la *résidusphère.* Cette apparente dénitrification (micro)aérobie dépend surtout d'une relative surabondance de substrats énergétiques carbonés préférablement oxydés à l'aide d'oxygène nitrique qu'élémentaire (Potter et al. 1995).

L'invention est applicable en *fertilisation azotobactérienne* (AZB) peut être réalisée par azotobactérisation (inoculation) des résidus de culture avant enfouissement (Claude et Fillion 2004) ou encore sans inoculation à l'aide d'agents chimio-taxiques favorisant la migration sur quelques mm des azotobactéries indigènes vers les résidusphères (EP3417691).

Rappelons que dans un sol arable non-saturé, les deux phénomènes - dénitrification aérobie (napA) et anaérobie (narG), sont concomitants voire simultanés (Chèneby et al. 2010). En présence de résidus de culture et une abondance de substrats carbonés (Lloyd 1993, Potter et al. 1999, Fazzolari et al. 1998, Philippot et Höberg 1999, Ji et al. 2015) l'expression de napA supplante celle de nifH (Wakelin et al. 2007), voire celle de narG. Donc, pour démontrer la faisabilité de l'invention, une modélisation de l'indicateur élémentaire iDEN a été implémentée dans R-Studio®. Ce modèle illustre l'abondance génomiques de narG, napA et nifH selon la molarité du nitrate distribuées normalement (R ; rnorm (stats)). Les coefficients de ce modèle, p1, p2 et p3, respectent la *structure de corrélation* au Tableau 1. Pour appliquer algébriquement cette structure de corrélation il faut avant tout la transformer en matrice positive définie et l'ajuster par la suite selon la méthode d'Iman et Davenport 1982 et Iman et Conover 1982 implémentée ici en langage R (cornode (mc2d)).

[Tableaux 1]

|  | NARp1 | NARp2 | NARp3 | NAPp1 | NAPp2 | NAPp3 | NIFp1 | NIFp2 | NIFp3 |
|---|---|---|---|---|---|---|---|---|---|
| NARp1 | 1 | -0.9 | 0.9 | 0.1 | 0.75 | 0.75 | 0.1 | 0.1 | 0.1 |
| NARp2 | -0.9 | 1 | 0.9 | 0.1 | 0.5 | 0.5 | 0.1 | 0.1 | 0.1 |
| NARp3 | 0.9 | 0.9 | 1 | 0.1 | 0.5 | 0.5 | 0.1 | 0.1 | 0.1 |
| NAPp1 | 0.1 | 0.1 | 0.1 | 1 | -0.1 | -0.1 | 0.1 | 0.75 | 0.75 |
| NAPp2 | 0.75 | 0.5 | 0.5 | -0.1 | 1 | 0.1 | 0.1 | 0.5 | 0.5 |
| NAPp3 | 0.75 | 0.5 | 0.5 | -0.1 | 0.1 | 1 | 0.1 | 0.5 | 0.5 |
| NIFp1 | 0.1 | 0.1 | 0.1 | 0.1 | 0.1 | 0.1 | 1 | 0.9 | 0.9 |
| NIFp2 | 0.1 | 0.1 | 0.1 | 0.75 | 0.5 | 0.5 | 0.9 | 1 | 0.9 |
| NIFp3 | 0.1 | 0.1 | 0.1 | 0.75 | 0.5 | 0.5 | 0.9 | 0.9 | 1 |

Quelques n = 50 coefficients empiriques p1, p2 et p2 maintenant distribués normalement en accord avec la susdite structure de corrélation déterminent les abondance génomique cNar, cNap et cNif en fonction d'une gamme de millimolarités de $NO_3$ selon les équations asymptotiques suivantes ;

[Math. 1]

$$cNar = p1 \text{ x } \exp\left(- [\![2.718]\!]\,{}^\wedge(p2 - p3 \text{ x NO3})\right)$$

[Math. 2]

$$cNap = p1 \text{ x } \exp(-.5 \text{ x } ((\log(NO3 + 2.25) - p2) / p3)^\wedge 2)$$

[Math. 3]

$$cNif = 1 / (1 + \exp(-p1 + p2 \text{ x NO3})^\wedge 1 / p3)$$

Ces trois équations sont empiriques. Pour NarG et NapA selon Wang et al. 1999, Potter et al. 1999, Kandelar et al. 2008, Richardson et al. 2009 et Philippot et al. 2005, 1999, et pour la rétroaction de NifH selon Hartmann et Burris et al. 1987, Kaliniskaya 1989, Brotonegro 1974 et Sorger 1969. Pour modéliser ces dynamiques d'abondance génomiques selon la milli-molarité (mM) du nitrate résidusphérique voir le paramétrage suivant de ces trois équations (Tableau 2) ;

[Tableaux 2]

| abondance génomique | p1 | p2 | p3 |
|---|---|---|---|
| cNar | 1 | 0.5 | 0.05 |
| cNap | 1 | 0.01 | 0.01 |
| cNif | 4 | 1 | 0.25 |

Ces valeurs initiales de p1, p2 et p3 - centres des susdites distributions normales (n = 50) seront modulées +/- 10% afin de générer un ensemble de valeurs cohérentes avec la susdite structure de corrélation permettant ainsi d'identifier une zone d'intersection (Figure 2) de ces fonctions d'abondance génomique (cGEN) selon mM-NOs établissant ainsi un éventail de valeurs de mM de nitrate (dNOs) dans la résidusphère, ainsi que le degré (limité) d'atténuation de la diazotrophie (Tableau 3).

[Fig. 2] : Modélisation de l'abondance génomique de NarG (cNAR ; dénitrification anaérobie) et de NapA (cNAP ; dénitrification aérobie) selon la milli-molarité nitrique (mM-$NO_3$) de la résidusphère. Ici, la superposition (haut) graphique des dynamiques (cinétiques) cNAR, cNAP et cNIF de manière à mettre en évidence une zone d'intersection (bas) de ces trois dynamiques.

Pour réduire la déntrification micro-nitrique attribuable à napA (cNAP) en atténuant le moins possible le potentiel diazotrophique d'AZB (cNIF), il faut assurer - ici à titre d'exemple (Tableau 3), une milli-molarité d'environ 1,360 mM-$NO_3$ dans la résidusphère, par exemple via l'application de triazones à libération lente directement au résidus de culture au sol. Le potentiel dénitrifiant via napA sera ainsi réduit de plus de moitié (0,486), tandis que le potentiel diazotrophique (cNif) d'AZB ne sera atténuer que de 20% (0,793). Cela représente un bon compromis agroécologique d'autant plus que dans le cadre de la susdite *fertilisation azotobactérienne raisonnée* (EP 3335536), ce léger tassement de l'indice iDEN ajoutera quelques unités d'azote à la dN de manière à assurer la réalisation du plein potentiel de rendement. Cette atténuation toute relative fait ici office d'indicateur élémentaire dit « iDEN » qui sera éventuellement agrégé a d'autres indicateurs élémentaires dans le cadre d'une fertilisation azotobactérienne dite *raisonnée* (EP3335536).

[Tableaux 3]

| variable | Valeur | écartype | unités |
|---|---|---|---|
| dNO3 (uN) | 1.360 | 0.430 | mM résidusphérique |
| cNAR | 0.486 | 0.062 | cNari / cNarmax |
| cNAP | 0.486 | 0.062 | cNapi / cNapmax |
| cNIF | 0.793 (iDEN) | 0.073 | cNifi / cNifmax |

L'invention présuppose un certain équilibre entre ces trois (3) phénomènes (Figure 2) afin de réduire cNap en évitant des teneurs en nitrates trop faibles en dessous de 1 mM-NOs sans pour autant trop réduire cNif. Or, ce compromis apparaissant ici autour de 1 à 2 mM-$NO_3$ (1,36) est parfaitement réalisable. En effet, (1,360 x 14 x la proportion massique des RC dans le sol) - soit d'environs1 % ou $\approx$10 tonnes de résidus / $\approx$1000 tonnes de sols par hectare sur 10 cm de profondeur après enfouissement desdits résidus de culture, représente qu'un peu plus d'une unité (kg/ha) d'azote minérale. En effet, puisque la densité apparente des résidus de culture n'est que de ~0,20 g/cm³, on peut grosso modo convertir dNOs au Tableau 3 (mM-$NO_3$) en kg-$N_{fertilisant}$/ha applicables directement aux biomasses aériennes sur pieds ou aux résidus de culture au sol.

L'invention est surtout utile si les reliquats post-récolte d'N-minéral sont relativement faibles comme c'est le cas en fertilisation azotobactérienne raisonnée (EP3335536), soit d'au plus 35 à 40 uN. En effet, de telles quantités d'N-minéral résiduel peuvent être totalement immobilisées dans les 5 à 8 jours post enfouissement (eg. Recous et al. 1995) favorisant ainsi l'expression de napA (cNAP) s'il y a abondance de substrats carbonés.

L'application de l'invention va donc dépendre de vitesse réduite à laquelle cet azote minéral sera libérée (cf. Figure 1). Bien qu'il existe des inhibiteurs de nitrification et d'uréases, ceux-ci affectent les azotobactéries et cela malgré une écotoxicologie bénigne. Parce que les triazones (TKI 2018, Clapp et al. 2001 ; tetrahydro-1,3,5-triazin-2(1H) / CAS 7098-14-8 / *EINECS* 230-406-5) sont moins bactéricides à l'égards des azotobactéries, il est avantageux de les appliquer à la résidusphère afin de ralentir la libération de l'azote minéral. La nitrification étant plus immédiate que l'ammonification des triazones, il s'en suit une accumulation plus rapide des nitrates ainsi libéré graduellement de manière contrôlée. (Clapp 2001). L'ammonium étant assimilé préférablement par les bactéries du sol, c'est le ratio $NO_3/NH_4$ tel qu'augmentée

par les triazones (Clapp 2001) qui dicte ici la disponibilité du $NO_3$.

On peut aussi favoriser cette libération (minéralisation) lente de l'N disponible aux azotobactéries en enrichissant par *incrustation histologique,* la teneur N des biomasses aériennes non-récolte et ultimement laissées au sol à titre de résidus de culture cellulosique. Pour ce faire, des engrais foliaire N, y compris des triazones, sont appliqués aux biomasses aériennes de la culture précédente produisant lesdits résidus de culture au sol plus tardivement et abondamment par rapport aux habituelles recommandations (cf. infra Tableau 11). L'apport tardif et plus massif de tels engrais-N foliaire va réduire leur efficacité mais aussi enrichir en N le feuillage et les tiges, voire favoriser l'accumulation de triazones à la surface et/ou dans l'épiderme (incrustation histologique).

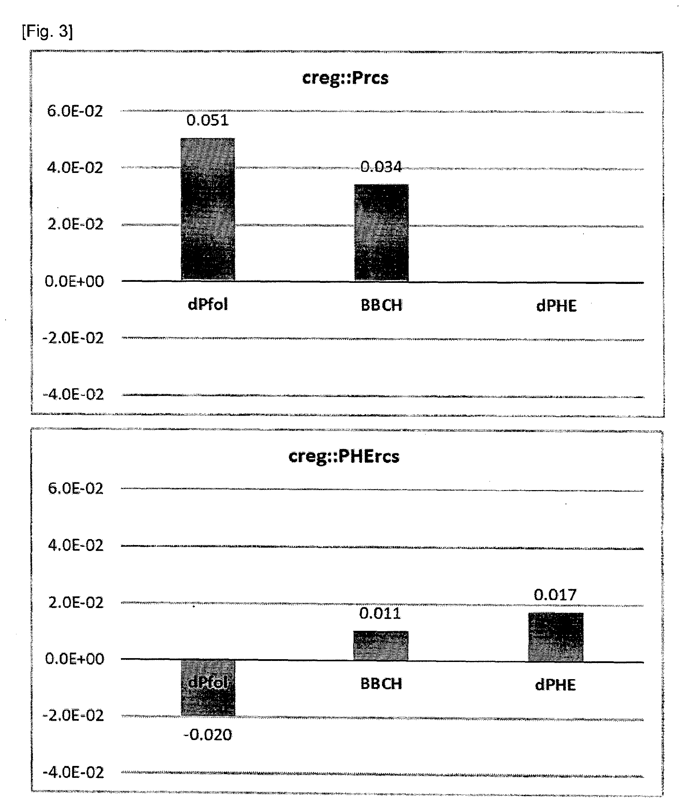

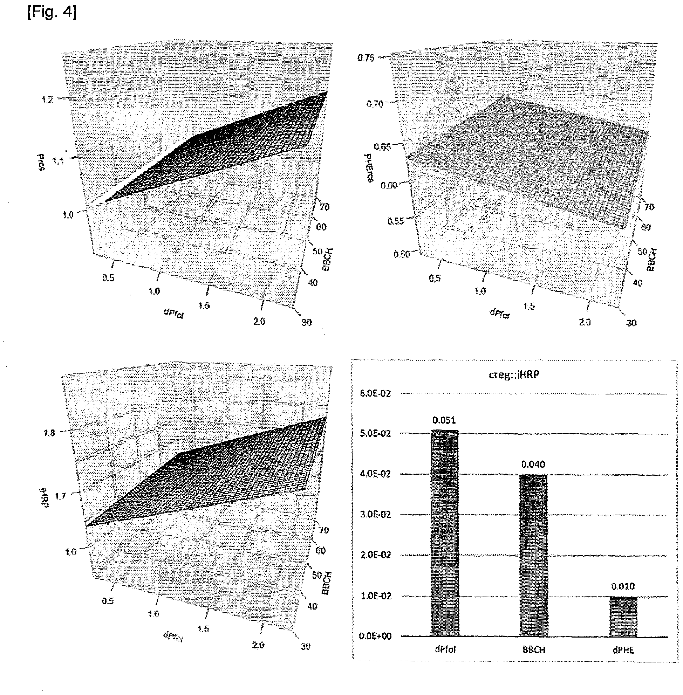

***MODE DE RÉALISATION POUR LE PHOSPHORE (P)*** - *Figures 3 et 4.* Seulement une partie de la dose d'engrais-P en application foliaire (dPfol), après avoir été absorbée à travers l'épiderme du feuillage, sera effectivement remobilisée vers les grains. Par exemple, dans le cas du riz et de plusieurs céréales à pailles et le colza, seulement 20% du P est exporté des feuilles vers les grains (Maillard et al. 2015). Ce P absorbé mais non organisé va s'accumuler et se retrouver éventuellement dans les résidus de culture laissés au sol. Mieux, cette inefficacité des dPfol s'accroît selon BBCH du fait d'une diminution progressive du ratio N/P (rNP) des parties aériennes et cela bien avant BBCH 41. De plus, le rNP initial des parties aériennes des céréales est souvent inférieur à 14-16, valeur critique en dessous de laquelle les carences en P sont peu détectables.

Paradoxalement, cette relative inefficacité sera ici mise à contribution en fertilisation azotobactérienne puisque que la teneur en P des résidus de culture au sol (Prcs) augmentera du fait d'une diminution du coefficient apparent d'utilisation du P avec l'augmentation de dPfol (Barèl 1975, Peirce 2015, Girma et al. 2007) de BBCH. Ce P va donc se retrouver simplement incrusté dans les résidus de culture au sol au profit des azotobactéries.

Pour démontrer la faisabilité de l'invention, une modélisation de l'indicateur élémentaire d'eAZB - iHRP, a été implémentée dans R-Studio®. iHRP indique l'efficacité de l'azotobactérisation des résidus de cultures et de la fertilisation azotobactérienne en intégrant les teneurs en P et PHE (acides phénoliques) des résidus. Cette modélisation d'iHRP comporte une série d'équations mathématiques dont les paramètres a et b doivent respecter la structure de corrélation au Tableau 4. Notons encore une fois, pour appliquer algébriquement cette structure de corrélation il faut la transformer en matrice positive définie et l'ajuster par la suite selon la méthode d'Iman et Davenport 1982 et Iman et Conover 1982 implémentée ici en langage R (cornode (mc2d) ; cf. Tableau 1).

[Tableaux 4]

| paramètre | a1 | b1 | a2 | b2 | a3 | b3 | a4 | b4 | a5 | b5 |
|---|---|---|---|---|---|---|---|---|---|---|
| a1 | 1 | 0.6 | 0.6 | 0.6 | 0.6 | -0.6 | -0.6 | 0.6 | 0.6 | 0.6 |
| b1 | 0.6 | 1 | 0.6 | 0.6 | 0.6 | -0.6 | -0.6 | 0.6 | 0.6 | 0.6 |
| a2 | 0.6 | 0.6 | 1 | 0.6 | 0.6 | -0.6 | -0.6 | 0.6 | 0.6 | 0.6 |
| b2 | 0.6 | 0.6 | 0.6 | 1 | 0.6 | -0.6 | -0.6 | 0.6 | 0.6 | 0.6 |
| a3 | 0.6 | 0.6 | 0.6 | 0.6 | 1 | -0.6 | -0.6 | 0.6 | 0.6 | 0.6 |
| b3 | -0.6 | -0.6 | -0.6 | -0.6 | -0.6 | 1 | 1 | -0.6 | -0.6 | -0.6 |
| a4 | -0.6 | -0.6 | -0.6 | -0.6 | -0.6 | 1 | 1 | -0.6 | -0.6 | -0.6 |
| b4 | 0.6 | 0.6 | 0.6 | 0.6 | 0.6 | -0.6 | -0.6 | 1 | 1 | 1 |
| a5 | 0.6 | 0.6 | 0.6 | 0.6 | 0.6 | -0.6 | -0.6 | 1 | 1 | 1 |
| b5 | 0.6 | 0.6 | 0.6 | 0.6 | 0.6 | -0.6 | -0.6 | 1 | 1 | 1 |

Le paramétrage a1/b1 (Prcs_dPfol / Barèl 1975) décrit la différence entre dPfol absorbé par les parties aériennes et transporté ver les épis, différence qui s'accroit avec l'augmentation de dPfol. La proportion de dPfol absorbé mais non transporté va s'accumuler dans les résidus de culture ;

[Math. 4]

$$\text{Prcs\_dPfol} = \{\mathbf{a1} * \mathbf{dPfol} + \mathbf{b1}\}$$

Le report de dPfol à des stades BBCH plus avancés augmentera Prcs selon dPfol (Mosali et al. 2006, Peirce 2015, Girma et al. 2007). En effet, plus dPfol sera appliquée à des stades BBCH avancés, plus son coefficient apparent d'utilisation (CAU) sera faible favorisant l'accumulation de ce P dans les résidus de culture. En principe, l'efficacité des dPfol est véritablement appréciable *que* si appliqués avant BBCH 29-31 faute d'un rNP suffisamment élevé par après (cf. Mosali et al. 2006 pour le blé). Or, a priori, l'homme du métier ne recherchera donc pas à retarder ce stade d'application de dPfol. Idem pour ce qui est de l'augmentation de dPfol. Au contraire puisque cette augmentation est contreproductive et aura des conséquences phytosanitaires indésirables en diminuant la teneur histologique du feuillage en acides phénoliques (Jones et Hartley 1999 et Wilcoxson 1980).

Le paramétrage a2/b2 (Prcs_BBCH / Cadot et al. 2018) ne bénéficie pas de données décrivant directement l'effet de dPfol sur Prcs selon le stade d'application (BBCH). Cependant, puisque rPN augmente selon BBCH contribuant à réduire l'efficacité de dPfol. Cette perte d'efficacité de dPfol favorisera nécessairement l'accumulation de Prcs selon l'avancement de BBCH ;

### [Math. 5]

$$Prcs\_BBCH = \{a2 * BBCH + b2\}$$

Une diminution de PHErcs attribuable à dPfol peut être compensée par l'apport de PHE aux parties aériennes (Jones et Hartley 1999, Wright et al.2010). En effet, une augmentation de la richesse en P du feuillage attribuable à une augmentation de dPfol sera associée à une diminution concomitante, voire proportionnelle des teneurs en aPHE du feuillage et des parties aériennes. Augmenter dPfol sera donc contre-productif puisque les résidus de culture seront moins riches en PHE (Jones et Hartley 1999). Cela nuira éventuellement au déplacement chimio-taxique des azotobactéries du sol vers la résidusphère (EP3417691). Or, si on retard l'application de dPfol, le faible taux d'organisation et de remobilisation de ce P minimisera cette disparition des PHE. Puisque l'efficacité d'AZB dépend des PHE, cet enrichissement en P des parties aériennes empêcherait (annulerait) l'amélioration de l'efficacité d'AZB attribuable à une augmentation de la teneur en P des résidus de culture disponible aux azotobactéries.

Le paramétrage a3/b3 (PHErcs_Pfol / Wrigth et al. 2010) reflète cette diminution de la teneur en PHE des parties aériennes et des résidus de culture (PHErcs), et donc des éventuels résidus de culture, avec l'augmentation de dPfol et en accord avec le modèle dit « PMC » de Jones et Hartley 1999. La méta-analyse de Wright et al. 2010 permet d'exprimer cette tendance commensurablement avec les trois autres ;

### [Math. 6]

$$PHErcs\_dPfol = \{a3 * dPfol + b3\}$$

La diminution de PHErcs est donc atténuée par la moindre organisation de dPfol augmentée et retardée (Wright et al. 2010, Marshall et Wardlaw 1973). Puisqu'appliquer dPfol tardivement réduit l'organisation du P, cette pseudo-carence ne *signalisera* pas à la plante une réduction du taux de production des PHE (Jones et Hartley 1999). Cela se traduira par un maintien de PHErcs.

Le paramétrage a4/b4 (PHErcs_BBCH / Wrigth et al. 2010) est similaire au paramétrage a2b2 (Prcs_BBCH). Nous savons cependant que le ratio N/P (rNP) décroit selon BBCH et que PHErcs est fonction de rNP (Wright et al. 2010). En combinant ces deux tendances, on obtient PHErcs_BBCH ;

### [Math. 7]

$$PHErcs\_BBCH = \{a4 * BBCH + b4\}$$

On peut mitiger la susdite diminution de PHErcs, d'apporter toute aussi tardivement une dose d'acide phénolique aux résidus de culture. Cela dit, l'augmentation de PHErcs par application foliaire d'acides phénoliques et/ou humique et fulviques n'est pas très documentée (eg. Delfine et al. 2005, Canellas et al. 2014). Il est néanmoins raisonnable de croire que PHErcs augmentera selon dPHE et qu'au moins 50% de cet apport d'acide phénoliques aux résidus de culture se retrouvera dans ces résidus de culture au moment de leur incorporation au sol.

Le paramétrage a5/b5 (PHErcs_dPHE ; Quan et Xuan 2018, Hussain et al. 2008) est basé sur des gammes de dPHE inspirées des taux d'application rapportés pour diverses acides phénoliques - salicylique notamment. Seuls Quan et Xuan 2018 proposent l'application d'acides vanillique et p-hydroxy-benzoïque au feuillage de céréales (riz) ;

### [Math. 8]

$$PHErcs\_dPHE = \{a5 * dPHE + b5\}$$

Ces cinq (5) équations décrivant la dynamique du P et de PHE dans les biomasses aériennes et les résidus de culture cellulosiques d'une grande culture en fonction de dPfol, dPHE et BBCH et au profit d'eAZB ont été intégrées à une modélisation de l'indice élémentaire iHRP implémentée dans R et R-Studio®. Le paramétrage du modèle HRP est résumé au Tableau 5 ;

[Tableaux 5]

| paramètre | valeur proposée |
|---|---|
| a1 | 0.75 |
| b1 | 0.25 |
| a2 | 0.67 |
| b2 | 0.25 |
| a3 | -0.25 |
| b3 | 1 |
| a4 | 0.33 |
| b4 | 1 |
| a5 | 0.5 |
| b5 | 1 |

[Fig. 3] : Coefficients de régression partiels (creg) de Prcs, PHErcs et iHRP par rapport à dPfol, BBCH et dPHE. L'action de dPHE sur Prcs est nulle du fait que l'apport de P au feuillage réduit PHErcs. L'action négative de dPfol sur PHErcs est elle limitée (creg que légèrement négatif) du fait de dPHE. In fine, l'effet des dPfol et BBCH sur iHRP sont importants et commensurables tandis que l'effet de dPHE est relativement faible puisque cet apport d'acide phénolique ne fait que compenser la perte de PHErcs attribuable à dPfol (cf. Figure 4).

[Fig. 4] : Effet de dPfol x BBCH sur Prcs représentant les contributions de dPfol et BBCH à l'augmentation de Prcs, PHErcs et iHRP. A priori c'est surtout dPfol qui permet d'augmenter Prcs, dPHE étant - encore une fois, sans effet. Contrairement à Prcs, PHErcs est affect appréciablement non seulement par dPHE, mais aussi BBCH qui ici réduit le niveau d'organisation du P et donc sa rétroaction négative sur la production d'acides phénoliques, d'où l'augmentation de PHErcs. C'est surtout dPfol qui permet ici d'augmenter iHRP, BBCH et dPHE atténuant la réduction de PHErcs provoqué par cette même dPfol.

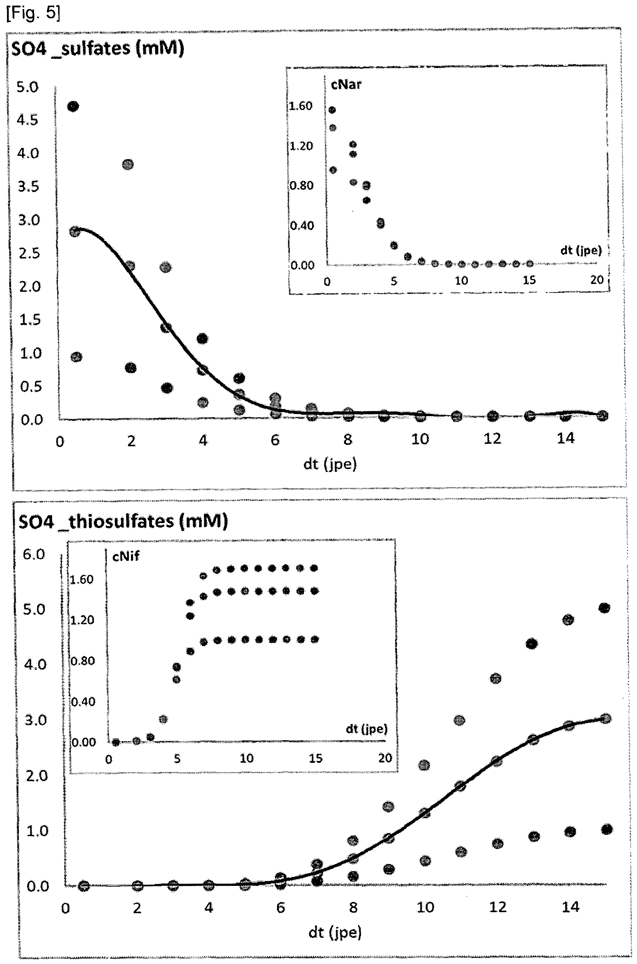

Il faut appliquer dPfol (+dPHE) à des stades de croissance post 30 - 39 BBCH, stades de croissance auxquels en principe le taux de mobilisation de l'azote par la culture en place est le plus élevé (Recous et Mâchât 1999). Ce report à des stades BBCH plus avancés diminuera le taux d'assimilation du P et des PHE appliqués au feuillage et cela au profit d'une augmentation des Prcs et PHErcs, et donc de l'indice élémentaire d'eAZB qu'est iHRP (Figures 4 et 5).

Il existe sur le marché des préparations d'engrais P soluble dans l'eau et pulvérisables, le plus souvent destinées à l'application foliaire (EP3120680). Les microdoses dPfol ainsi appliquées au feuillage sont par conséquent faibles en comparaison aux fumures de fonds. Il est donc raisonnable de croire que la filière industrielle dédiée au recyclage du P organique d'origine urbaine ou agricole puisse fournir l'intégralité des quantités de P nécessaire à l'invention.

Les grandes cultures sont semées une fois ces résidus de culture azotobactérisés, y compris par inoculation d'azotobactéries s'il le faut (Claude et Fillion 2004), et enfouis en pré-semis. L'invention permettra une augmentation de Prcs tout en maintenant les teneurs en PHE du feuillage. En augmentant et en retardant, l'application de dPfol, l'organisation de ce P sera diminuée ce qui provoquera une augmentation - ou du moins un maintien, de PHErcs. Plus le stade d'application de dPfol + dPHE est avancé, plus Prcs sera important du fait d'une assimilation et transport de ce P vers les épis moins important, sans affecté négativement PHErcs. Sur cultures d'hiver, les (premières) dPfol sont souvent limitées à quelques 2200 g-$P_2O_5$ au stade tallage (BBCH 31).

L'invention est applicable aux parties aériennes de grandes cultures sur pieds produisant des résidus de culture substrats de l'AZB. Il est avantageux de de cibler le milieu des tiges ou du moins le dessous de la canopée de la culture produisant ces résidus de culture cellulosiques. Pour ce faire, il est possible d'utiliser des buses simplex - alias vortex, a priori peu utilisées en agriculture du fait de jets jugés habituellement trop groupés.

Cette méthode d'AZB permet d'ajuster la dose prévisionnelle d'engrais N en affectant eAZB selon la modulation de l'indicateur élémentaire iHRP. iHRP est en effet intégrable au calcul d'eAZB et selon l'approche décrite dans EP3335536.

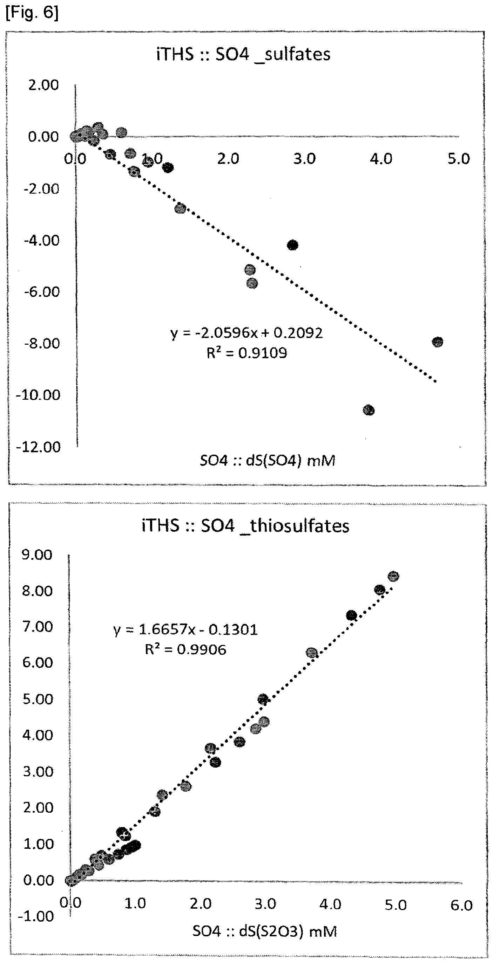

**Mode de réalisation pour le soufre (S)** - **Figures 5 et 6.** En l'état, l'application de thiosulfates d'ammonium (He et al. 2017) affecte peu la minéralisation des résidus de culture parce que les bactéries non résidusphériques situées à plus de 3 ou 4 mm vont-elles aussi proliférer en immobilisant l'azote et le soufre libérés par la dissolution de ces sels azotés. L'invention a donc l'avantage d'alimenter en S surtout les azotobactéries résidusphériques proliférant après l'immobilisation des seuls reliquats d'azote minéral du sol, les thiosulfates libérant le S alimentant la nitrogenase qu'après un certain délai coïncidant grossièrement grosso modo à leur montée en puissance.

Pour évaluer cette réduction de rCN il suffit de décrire l'activité des flores azotobactériennes par rapport à celle des flores dénitrifiantes - très abondantes en sols arables (Philippot et al. 2002), et cellulolytiques (Shabaz 2016) suite à l'apport de sels sulfates et thiosulfates. Pour ce faire, voir les équations suivantes dont le paramétrage et proposé au Tableau 6 ;

cinétique de libération des sulfates de sels sulfatés

[Math. 9]

$$SO4 = p1dSf * EXP\left(-0.5 * \left(\frac{LOG(dt + 2.25) - p2sulf}{p3sulf}\right)^2\right)$$

cinétique de libération des sulfates de sels thiosulfatés

[Math. 10]

$$SO4 = p1dSf * EXP\left(-0.5 * \left(\frac{LOG(dt + 2.25) - p2thio}{p3thio}\right)^2\right)$$

cinétique d'expression génomique de NIF (Figure 5)

[Math. 11]

$$cNIF = \frac{p1GEN}{1 + \frac{EXP(p1GEN + p2NIF * dt)^1}{p3NIF}}$$

cinétique d'expression génomique de NAR (Figure 5)

[Math. 12]

$$cNAR = \frac{p1GEN}{1 + \frac{EXP(p1GEN + p2NAR * dt)^1}{p3NAR}}$$

Cinétique d'expression génomique de NAP :

[Math. 13]

$$cNAP = p1GEN * EXP\left(-0.5 * \left(\frac{LOG(dt + 2.25) - p2NAP}{p3NAP}\right)^2\right)$$

indicateur élémentaire iTHS avec sulfates (Figure 6)

[Math. 14]

$$iTHSsulf = \{cNIF * SO4sulf - (cNAR * SO4sulf + cNAP * SO4sulf)\}$$

indicateur élémentaire iTHS avec thiosulfate (Figure 6)

[Math. 15]

$$iTHSthio = \{cNIF * SO4thio - (cNAR * SO4thio + cNAP * SO4thio)\}$$

[Tableaux 6]

| paramètre | valeur proposée |
|---|---|
| p1dSf | = dS |
| p2sulf | 0.75 |
| p3sulf | 0.125 |
| p2thio | 1.125 |
| p3thio | 0.1 |
| p1GEN | = 1 + Log10(dS) |
| p2NIF | -1.67 |
| p3NIF | 0.001 |
| p2NAR | 1 |
| p3NAR | 100 |
| p2NAP | 0.67 |
| p3NAP | 0.1 |

Implémenté dans R et R-Studio®, cette modélisation de l'indicateur élémentaire iTHS d'eAZB comporte cinq (5) sections. Une 1ière section permet d'imposer une *structure de corrélation* (Tableau 7) selon Iman et Conover 1982 et Iman et Davenport 1982 aux paramètres p1, p2 et p3 pour Nif, Nar et Nap régissant l'abondance génomiques de NifH, narG et napA respectivement. Ces paramètres sont distribués normalement (R ; rnorm (stats)) mais dont les coefficients p1, p2 et p3 respectent la structure de corrélation au Tableau 8. Pour appliquer algébriquement cette structure de corrélation il faut donc la transformer en matrice positive définie avant de l'ajuster selon Iman et Davenport 1982 et Iman et Conover 1982 implémentée ici en langage R (cornode (mc2d)).

[Tableaux 7]

| | p1GEN | p2NIF | p3NIF | p2NAR | P3NAR | p2NAP | p3NAP |
|---|---|---|---|---|---|---|---|
| p1GEN | 1 | 0.6 | -0.6 | 0.6 | -0.6 | 0 | 0 |
| p2NIF | 0.6 | 1 | -0.6 | 0 | -0.6 | 0 | 0 |
| p3NIF | -0.6 | -0.6 | 1 | 0 | 0 | 0 | 0 |
| p2NAR | 0.6 | 0 | 0 | 1 | -0.6 | 0 | 0 |
| P3NAR | -0.6 | -0.6 | 0 | -0.6 | 1 | 0 | 0 |
| p2NAP | 0 | 0 | 0 | 0 | 0 | 1 | 0 |
| p3NAP | 0 | 0 | 0 | 0 | 0 | 0 | 1 |

Une 2ième section impose cette structure de corrélation aux niveaux d'expression génomiques régissant l'activité des complexes enzymatiques nitrogenase (Nif), nitrate réductase membranaire (Nar) et périplasmique (Nap). La 3ième section implémente le paramétrage au Tableau 7 applicables aux cinétiques de libération des ions $SO_4$ et les susdits niveaux d'expression génomique Nif, Nar et Nap. La 4ième section calcul iTHS obtenus après ici à titre d'exemple 15 jours post-enfouissement (jpe) des résidus de culture enduits de sels sulfatés ($iTHS_{sulf}$) et thiosulfatés ($iTHS_{thio}$). Cinquièmement, une représentation algébrique à l'aide d'un modèle linéaire multivariables décrivant iTHS selon la dose S (dS), la concentration (mM ; milli-molarité) des sulfates 15 jours post enfouissement (jpe) libérés de sels sulfaté (SO4sulf) et thiosulfatés (SO4thio) ainsi que dt (log2(dt)) afin de tenir compte des cinétiques de dissolution différentes pour sulfates et thiosulfates (cf. Tableaux 8 et 9).

Fig. 5 : A titre d'exemples la cinétique de libération d'ions sulfate d'engrais S composés de simples sels sulfates (haut) tels que les sulfates de calcium, magnésium et potassium, voire d'ammonium. La figure du bas représente elle la cinétique de libération d'ions sulfate d'engrais composés cette fois-ci de sels thiosulfates. En abîmes les cinétiques d'expression des opérons nifH (cNif ; nitrogenase) et narG (cNar ; nitrate réductase membranaire) à des doses de S (dS) de 1, 3 et 5 uS. Notons que « c » est ici le nombre relatif de copies génomiques par rapport aux maximum observé avec la dS = 1 uS). Le paramétrage proposé de ces cinétiques, y compris celle de la nitrate réductase périplasmique (napA) est au Tableau 6. A noter enfin la concordance (au sens de la Figure 1) entre la cinétique de libération de sulfates de sels thiosulfates et celle de l'expression de l'opéron nifH.

[Fig. 6] : Indice élémentaire iTHS défini la différence entre le produit du nombre relatif de copies génomiques cNif et la teneur en ions sulfatés ($SO_4$ ; mM) provenant soit de sels sulfatés (figure haut) ou thiosulfatés (figure bas) et la somme des produits du nombre de copie génomique cNar et cNap et les teneurs correspondantes des susdits ions sulfatés. Pour les $SO_4$ provenant de sels sulfatés iTHSsulf = {cNIF*$SO_4$sulf - (cNAR * $SO_4$sulf + cNAP * $SO_4$sulf)}, et idem pour les $SO_4$ provenant de sels thiosulfaté iTHSthio = {cNIF*$SO_4$^thio - (cNAR * $SO_4$thio + cNAP * $SO_4$thio)}. iTHS *régresse* selon l'augmentation des ions $SO_4$ libérés rapidement de sels sulfatés (figure haut) et *progresse* selon l'augmentation d'ions $SO_4$ libéré plus lentement de sels thiosulfatés (figure bas).

Selon l'indice élémentaire iTHSsulf en présence d'ions sulfatés libérés rapidement dans les premiers jours post enfouissement des RCS enrichis de sels sulfatés (Figure 6, haut) ; évolution de l'indice élémentaire iTHSsulf en présence d'ions sulfatés libérés lentement dans les premiers jours post enfouissement des RCS enrichis de sels thiosulfatés (Figure 6, bas). Cette modélisation révèle que l'indicateur élémentaire iTHS progresse bien plus rapidement avec l'apport de sels non azotés thiosulfates (**Tableau 9 :** *Analyse de la variance pour la régression linéaire multivariables d'iTHS selon la dose de S et la quantité de $SO_4$ libérée des sels thiosulfatés)* que sulfate (**Tableau 8 :** *Analyse de la variance pour la régression linéaire multivariables d'iTHS selon la dose de S et la quantité de $SO_4$ libérée des sels sulfatés)* vraisemblablement du fait d'une libération plus lente du S puisque le coefficient log2(dt) est négatif pour les thiosulfates, ce qui va nécessairement réduire le rCN de la résidusphère et en améliorer le niveau de dégradation comme le recherchait He et al. 2017.

[Tableaux 8]

| $iTHSsulf \sim dS{+}SO4_{sulfates}{+}log2(dt)$ | coefficient | écartype | t-test | Pr(>\|t\|) | |
|---|---|---|---|---|---|
| *(Y::Xo)* | -1.60427 | 1.17088 | -1.370 | 0.171514 | |
| *dS* | -0.13368 | 0.09903 | -1.350 | 0.177898 | |
| *SO4sulfates* | 0.59128 | 0.12542 | 4.715 | 3.49E-06 | *** |
| *log2(dt)* | 0.72515 | 0.19927 | 3.639 | 0.000315 | *** |

[Tableaux 9]

| $iTHS_{thio} \sim dS{+}SO4_{sulfates}{+}log2(dt)$ | Coefficient | écartype | t-test | Pr(>\|t\|) | |
|---|---|---|---|---|---|
| *(Y::Xo)* | -1.40819 | 0.15152 | -9.294 | 2.00E-16 | *** |
| *dS* | 0.11395 | 0.01330 | 8.565 | 3.40E-16 | *** |
| *SO4thiosulfates* | 1.89746 | 0.01457 | 130.217 | 2.00E-16 | *** |
| *log2(dt)* | -0.06526 | 0.02694 | -2.422 | 0.015900 | * |

Ces quelques 1 à 5 mM de sulfates peuvent être apporter aux résidusphères à l'aide de quelques unités (kg-S/ha) d'engrais S directement aux résidus de culture au sol ou encore aux biomasses aériennes de la culture précurseurs de ces résidus de culture au sol.

Cette libération plus lente sur 2 à 3 semaines du S de sels thiosulfates non-azotés n'affectera pas négativement le régime azoté des azotobactéries puisque l'action anti-uréases de tels thiosulfates n'est que marginale par rapport à celle d'inhibiteurs chimiques plus puissants (Sullivan et Havlin 1992, Mcarty et al. 1990 et Grant et al. 1996). Paradoxalement, ce défaut des thiosulfates est ici un avantage dans le cadre de la réalisation de la présente invention. Comme pour les deux autres indicateurs élémentaires d'eAZB - iDEN et iHRP, iTHS est en effet intégrable au calcul d'eAZB dans le cadre d'une approche de fertilisation azotobactérienne raisonnée décrite dans EP3335536.

Applications aux grandes cultures d'hiver - Figure 7. La réalisation et l'application agronomique de l'invention s'appuie sur les recommandations préconisées par les actuels fabricants d'engrais foliaires en formulation liquides miscibles avec l'eau. Pour ce qui est des préparations de simples sels N, P et S de nitrates, de phosphates et de sulfates, respectivement, déjà communément utilisées en fertilisation foliaire se référer aux catalogues (eg. ttps://www.yara.fr/fertilisation/ ; https://www.agronutrition.com/fr) quitte à en augmenter les doses-hectare et retarder leurs applications à des stades BBCH plus avancés au sens de la présente invention. Pour ce qui est des préparations de sels N, P et S plus complexes comprenant des triazones, polyphosphates et thiosulfates, respectivement, se référer, par exemple, au catalogue de la société Tessenderlo Kerley experte en matière ; https://www.cropvitality.com/en. En première approximation, ces doses-hectare et stades BBCH d'application selon l'état de l'art sont de l'ordre de grandeur proposés au Tableau 10 ;

[Tableaux 10]

| doses-hectare (kg/ha) | sels NO$_3$, PO$_4$, SO$_4$ | sels triazones, poly-PO$_4$, thio-SO$_4$ |
|---|---|---|
| N | 5 à 6 | environ 4 |
| P | moins de 1,00 | moins de 1,00 |
| S | 2 à 3 | 2 à 4 |
| stades d'application BBCH | sels NOa, POa, SO$_4$ | sels triazones, poly-PO$_4$, thio-SO$_4$ |
| N | 35 à 46 | 23 à 49 |
| P | 23 à 35 | 25 à 39 |
| S | 23 à 35 | 23 à 37 |

A titre d'exemple prenons les triazones, les poly-phosphates et les thiosulfates entant qu'engrais N, P et S complexes, à libération lente et faiblement bactéricides. Au Tableau 11 apparaît les doses hectare en unité d'N, P et S (uN, uP et uS ; kg-N, P et S / ha ; écarts-type entre parenthèses) les stades BBCH préconisés pour leur application foliaire à une culture céréalière produisant les des résidus de culture cellulosiques laissés au sol. Sont aussi rapportée côte à côte les doses-hectare et les stades d'application BBCH modifiés au sens de la présente invention. Ces modifications par rapport à l'état de la technique rapportée dans les différentes plaquettes commerciales et dossiers d'homologation (s'ils existent) - tant Européens que Nord-Américains, vont nécessairement réduire les coefficients apparents d'utilisation (CAU) par la plante de ces engrais N, P et S et favoriser ainsi la susdite *incrustation histologique* de ces éléments nutritifs ultimement libérés sous forme de nitrates, phosphates et sulfates d'autant plus disponibles aux azotobactéries résidusphériques (Figure 1).

[Tableaux 11]

| élément nutritif | molécule | dose-hectare (L/ha) | | kg-NPS/ha (u ; unité) | | stades BBCH (0 à 100) | |
|---|---|---|---|---|---|---|---|
| | | préconisée | invention | préconisée | invention | préconisée | invention |
| N | triazones aréiques | 15 (5) | 18.75 (5) | 3.7 (0.9) | 4.625 (0.9) | 23 à 49 | 29 à 59 |
| N | thiosulfate d'NH4 | 15 (5) | 18.75 (5) | 1.8 (0.6) | 2.25 (0.6) | 31 à 39 | 37 à 47 |
| N | poly-PO4 d'NH4 | 4 (1) | 5 (1) | 0.6 (0.2) | 0.75 (0.2) | 25 à 39 | 31 à 47 |
| P | poly-PO4 d'NH4 | 4 (1) | 5 (1) | 0.8 (0.2) | 1 (0.2) | 25 à 39 | 31 à 47 |
| S | thiosulfate d'NH4 | 15 (5) | 18.75 (5) | 3.9 (1.3) | 4.875 (1.3) | 23 à 37 | 29 à 45 |
| S | thiosulfate de K | 18 (3) | 22.5 (3) | 3.1 (0.6) | 3.875 (0.6) | 23 à 37 | 29 à 45 |
| S | thiosulfate de Ca | 15 (5) | 18.75 (5) | 1.5 (0.5) | 1.875 (0.5) | 23 à 37 | 29 à 45 |
| S | thiosulfate de Mg | 23 (3) | 28.75 (3) | 2.3 (0.3) | 2.875 (0.3) | 23 à 37 | 29 à 45 |

Sigles et définitions. **AZB** - fertilisation azotobactérienne (Claude et Fillion 2004) ; **eAZB** - efficacité relative (ratio sans unités) de la fertilisation azotobactérienne ; **RCS** - résidus de culture (cellulosiques) au sol ; **iAZB** - (EP3335536) : indice agrégé (sans unité) d'eAZB composé de différents indicateurs élémentaires y compris ici iDEN, iHRP et iTHS ; **BBCH** - échelle du stade de croissance de la culture pour l'application de dPfol ; **RDT** - rendement agronomique en kg ou tonnes de grains par hectare ; **RDN** - rendement protéique en kg ou quintaux d'N dans les grains par hectare ; **RUN** - rendement protéique unitaire en kg de N par unité d'N (uN ; kg-N$_{fertilisant}$/ha) ; **CAU** - coefficient apparent d'utilisation indiquant la proportion de l'élément nutritif concerné, ici N, P ou S, apporté à titre d'engrais et retrouvé post-récolte dans les grains.

Sigles et définitions (N). **narG** - opéron de la dénitrification aérobique ; **napA** - opéron de la dénitrification anaérobique ; **nifH** - opéron de la diazotrophie ; **cNar, cNap** et **cNif** - niveaux d'expression de ces opérons en nombre de copies par unité de masse ; **DEN** - dénitrification via narG et/ou napA ; **iDEN** - indice élémentaire quantifiant l'atténuation de la diazotrophie par $NO_3$ ; **dNfol** - nombre d'unité d'azote appliqués au parties aériennes ; **dNrcs** - nombre d'unité d'azote appliqués au résidus de culture au sol ; **microdoses** - des quantités d'azote fertilisant inférieures à 10 uN ; **unité d'azote (uN)** - 1 kg-N$_{fertilisant}$ / hectare / année.

<u>Sigles et définitions (P).</u> **Pfol** - teneur en P du feuillage (parties aériennes) ; **dPfol** - doses de P apportées au feuillage (parties aériennes) en unités de P (uP ; kg-P/ha) ; **dPHE** - doses d'acides phénolique apportées au feuillage et partie aérienne en uPHE ; **PHErcs** - teneur (relative maxi = 1,00 ; sans unités) acides phénoliques des résidus de culture ; **Prcs** - teneur (relative maxi = 1,00 ; sans unités) en P des résidus de culture ; **RDP** - rendement phosphorique en kg de P dans les grains par hectare ; **RUP** - rendement phosphorique unitaire en kg de P par unité d'N (uP ; kg-P$_{fertilisant}$/ha) ; **iHRP** - indicateur élémentaire (sans unités) de l'efficacité de la fertilisation azotobactérienne représentant la somme des valeurs relatives de Prcs et PHErcs.

<u>Sigles et définitions (S).</u> **p1dSf** - paramètre asymptotique maximal ≈ **dS** (i.e. dose de S, sulfate ou thiosulfate) ; **p2/p3sulf** - $SO_4$sulf via sels sulfates ; **p2/p3thio** - $SO_4$thio via sels thiosulfates ; **p1GEN** - paramètre asymptotique ≈ 1,00 x dS pour **cNif, cNar** et **cNap ; p2/p3NIF** - paramètres asymptotiques de forme pour cNIF ; **p2/p3NAR** - paramètres asymptotiques de forme pour cNAR ; **p2/p3NAP** - paramètres asymptotiques de forme pour cNAP ; **iTHS** - indicateur élémentaire de la dégradation des résidus de culture affectée par la libération du S et niveau d'expression génomique des complexes enzymatiques riches en S tel que la nitrogenase.

**Références**

Asseng SF etal. 2013. Uncertainty in Simulating Wheat Yields under Climate Change. Nature Climate Change 3 : 827-32. http://dx.doi.org/10.1038/nclimate1916.

Asseng SF et al. 2015. Benchmark data set for wheat growth models: field experiments and AgMIP multi-model simulations. Open Data J. Agric. Res. vol. 1, 1-5

Barèl D. 1975. Foliar application of phosphorus compounds. Rétrospective Theses and Dissertations. 5455 / https://lib.dr.iastate.edu/rtd/5455

Barrow, NJ. 1960. A comparison of the mineralization of nitrogen and of sulphur from decomposing organic materials. Australian Journal of Agricultural Research 11(6) 960 - 969 http://www.publish.csiro.au/cp/AR9600960

Brotonegro, S. 1974. Nitrogen fixation and nitrogenase activity of Azotobacter chroococcum. Thesis of S. Brotonegoro, Wageningen, 13th June, 1974

Cadot, S, G Bélanger, N Ziadi, Ch. Morel et S Sinaj. 2018. Critical plant and soil phosphorus for wheat, maize, and rapeseed after 44 years of P fertilization. Nutr Cycl Agroecosyst https://doi.org/10.1007/s10705-018-9956-0

Canellas LP et FL Olivares. 2014. Physiological responses to humic substances as plant growth promoter. Chemical and Biological Technologies in Agriculture 2014, 1:3

Chèneby D, A Brauman, B Rabary et L Philippot. 2009. Differential Responses of Nitrate Reducer Community Size, Structure, and Activity to Tillage Systems. Appl. Environ. Microbiol. 75:3180-86

Chèneby D, D. Bru, N. Pascault, P. A. Maron, L. Ranjard et L. Philippot. 2010. Rôle of Plant Residues in Determining Temporal Patterns of the Activity, Size, and Structure of Nitrate Reducer Communities in Soil. Appl. Environ. Microbiol. 76 : 7136-7143

Clapp JG. 2001. Urea-Triazone N Characteristics and Uses. Research Article / Optimizing Nitrogen Management in Food and Energy Production and Environmental Protection: / Proceedings of the 2nd International Nitrogen Conférence on Science and Policy / The Scientific World 1(S2) : 103-107

Claude PP et L Fillion. 2004. Effet de l'apport d'un inoculum bactérien aux résidus de culture de maïs-grain au sol sur le rendement et la qualité de blés d'hiver panifiables en France. Agrosolutions. 15 (1) : 23-29.

Colloff MJ, SA Wakelin, D Gomez et SL Rogers. 2008. Détection of nitrogen cycle gènes in soils for measuring the effects of changes in land use and management. Soil Biology & Biochemistry 40 (2008) 1637-1645 DOI: 10.1016/j.soilbio.2008.01.019

Del Grosso SJ, WJ Parton, AR Mosier, DS Ojima, AE Kulmala et S Phongpan. 2000. General model for N2O and N2 gas émissions from soils due to dentrification. Global Biogeochemical Cycles 14 : 1045-1060

Delfine S, R Tognetti, E Desiderio et A Alvino. 2005. Effect of foliar application of N and numic acids on growth and yield of durum wheat. Agron. Sustain. Dev. 25:183-191.

Djurdjevic I, O Einsle et L Decamps. 2017. Nitrogenase Cofactor: Inspiration for Model Chemistry. Chem. Asian J. 2017, 12, 1447 - 1455 / DOI : 10.1002/asia.201700478

Dos Santos PC, DC Johnson, BE Ragle, M-C Unciuleac et DR Dean. 2007. Controlled Expression of nif and isc Iron-Sulfur Protein Maturation Components Reveals Target Specificity and Limited Functional Replacement between the Two Systems. J. Bacteriol. 189 : 2854-2862

Ebrahimi, A., and D. Or (2015), Hydration and diffusion processes shape microbial community organization and function in model soil aggregates, Water Resour. Res., 51, doi:10.1002/2015WR017565.

Eriksen, J. 2005. Gross sulphur minéralisation-immobilisation turnover in soil amended with plant residues. Soil Biology and Biochemistry 37(12) : 2216-2224

Fang, QX, L Ma, AD Halvorson, RW Malone, LR Ahuja, SJ Del Grosso et JL Hatfield. 2015. Evaluating four nitrous oxide émission algorithms in response to N rate on an irrigated corn field. Environ. Mod. Software 72: 56-70

Fazzolari E, B Nicolardot et J-C Germon. 1998. Simultaneous effects of increasing levels of glucose and oxygen partial pressures on dénitrification and dissimilatory nitrate réduction to ammonium in repacked soil cores. Eur. J. Soil Hot., 1998, 34 (I), 47-52 0

Firestone, M. K., M. S. Smith, R. B. Firestone, and J. M. Tiedie. 1979. The influence of nitrate, nitrite, and oxygen on the composition o! the gaseous products of dénitrification in soil. Soil Sci. Soc. Am. J. 43:1140-1144.

Girma, K, Martin, KL, Freeman, KW, Mosali, J, Teal, RK , Raun, William. R, Moges, S.M. et Arnall, D. B. 2007. 'Determination of Optimum Rate and Growth Stage for Foliar-Applied Phosphorus in Corn. Comm. Soil Sci. Plant Anal., 38: 9, 1137 - 1154

Goos, RJ et BE Johnson (2001) Thiosulfate oxidation by three soils as influenced by température, Communications in Soil Science and Plant Analysis, 32:17-18, 2841-2849

Grant CA, S Jia, KR Brown et LD Bailey. 1996. Volatile losses of NH3 from surface-applied urea and urea ammonium nitrate with and without the urease inhibitors NBPT or ammonium thiosulphate. Can. J. Soil Sci. 76: 417-419

Hartmann, A et RH Burris. 1987. Régulation of Nitrogenase Activity by Oxygen in Azospirillum brasilense and Azospirillum lipoferum. J. Bacteriol., 169(3): 944-948

He, Y, DR Presley, J Tatarko. Liquid N & S fertilizer solutions effects on the mass, chemical, and shear strength properties of winter wheat (T. aestivum) residue. Trans. ASABE 60 : 671-682

Hussain M, MA Malik, M. Farooq, MY Ashraf et MA Cheema. 2008. Improving Drought Tolérance by Exogenous Application of Glycinebetaine and Salicylic Acid in Sunflower. J. Agronomy & Crop Science ISSN 0931-2250 / doi:10.1111/j.1439-037X.2008.00305.x

Iman RL et JM Davenport. 1982. An itérative algorithm to produce a positive definite corrélation matrix from an approximate corrélation matrix. Sandia Report Sand81 - 1376. Sandia National Laboratory, Albuquerque NM 87 185.

Iman, RL et WJ Conover. 1982. A distribution-free approach to inducing rank corrélation among input variables. Commun. Stat. Simul. Comput. 11(3) : 311-334

Janzen HH et R Bettany. 1986. Release of available sulphur from fertilizers. Can. J. Soil Sci. 66: 91-103.

Ji, B, K Yang, L Zhu, Y Jiang, H Wang, J Zhou et H Zhang. 2015. Aérobic Dénitrification: A Review of important Advances of the Last 30 Years. Biotechnology and Bioprocess Engineering 20: 643-651

Jones CG et SE Hartley. 1999. A Protein Compétition Model of Phenolic Allocation. Oikos, Vol. 86, No. 1, pp. 27-44 / http://www.jstor.org/stable/3546567

Juszczuk IM, A Wiktorowska, E Malusa et AM Rychter. 2004. Changes in the concentration of phenolic compounds and exudation induced by phosphate deficiency in bean plants (Phaseolus vulgaris L.). Plant and Soil 267: 41-49, 2004.

Kalininskaya, TA. 1989. The Influence of Différent Forms of Combined Nitrogen on Nitrogen-Fixing Activity of Azospirilla in the Rhizosphere of Rice Plants. Dev. Soil Sci. 18: 283-286

Kandeler, E, Th. Brune, E Enowashu, N Dôrr, G Guggenberger, N Lamersdorf et L Philippot. 2009. Response of total and nitrate-dissimilating bacteria to reduced déposition ina spruce forest soil profile. FEMS Microbiol Ecol 67 (2009) 444-454

Lloyd, D. 1993. Aérobic Dénitrification in Soils and Sédiments: from Fallacies to Facts. TREE vol. 8, no. 10, October 1993

Maillard A, Diquélou S, Billard V, Laîné P, Garnica M, Prudent M, Garcia-Mina J-M, Yvin J-C and Ourry A (2015) Leaf minerai nutrient remobilization during leaf senescence and modulation by nutrient deficiency. Front. Plant Sci. 6:317. doi: 10.3389/fpls.2015.00317

Marshall, C et lF Wardlaw. 1973. A comparative study of the distribution and speed of movement of 14C assimilates and foliar applied 32P labelled P in wheat. Aust. J. Biol. Sci. 26: 1-13

McCarty GW, JM Bremner et MJ Krogmeier. 1990. Evaluation of ammonium thiosulfate as a soil urease. Fertilizer research September 1990, Volume 24, Issue 3, pp 135-139 https://link.springer.com/article/10.1007/BF01073581

McGill WB et CV Cole. 1981. Comparative Aspects of Cycling of Organic C, N, S and P Through Soil Organic Matter. Geoderma, 26 (1981) 267--286

Mosali, J. et al. 2006. Effect of Foliar Application of Phosphorus on Winter Wheat Grain Yield, Phosphorus Uptake, and Use Efficiency. Journal of Plant Nutrition, 29: 2147-2163, 2006

Niknahad-Gharmakher, H, S Piutti, J-M Machet, E. Benizri et S. Recous. 2012. Mineralization-immobilization of sulphur in a soit during décomposition of plant residues of varied chemical composition and S content. Plant&Soil 360:391-404 DOI 10.1007/s11104-012-1230-7

Noack SR, TM McBeath, et MJ McLaughlin. 2010. Potential for foliar phosphorus fertilisation of dryland cereal crops: a review Crop and Pasture Science 61(8):659-669

Oh J et J Silverstein. 1999. Oxygen inhibition of activated sludge dénitrification. Wat. Res. Vol. 33, No. 8, pp. 1925±1937, 1999

Peirce, C, E Facelli T McBeath, V Fernández et M McLaughlin. 2014. Leaf Wetting and Uptake of Fluid Foliar P Fertilizers for Wheat. Grains research & development corp. Australia

Peirce, C. 2015. Foliar fertilization of wheat plants with phosphorus. Ph.D. thesis, University of Adelaide (Australia), November 2015.

Philippot L et O. Hojberg. 1999. Dissimilatory nitrate reductases in bacteria. Biochimica et Biophysica Acta 1446 : 1-23

Philippot L et S Hallin. 2005. Finding the missing link between diversity + activity using denitrifying bacteria as a model functional community. Curr. Op. Microbiol. 8:234-9

Philippot L, S Piutti, F Martin-Laurent, S Hallet et J-C Germon. 2002. Molecular Analysis of the Nitrate-Reducing Community from Unplanted and Maize-Planted Soils. Appl. Environ. Microbiol. p. 6121-6128 Vol. 68, No. 12

Potter LC, P Millington, L Griffiths, GH Thomas et JA COLE. 1999. Compétition between Escherichia coli strains expressing either a periplasmic or a membrane-bound nitrate reductase : does Nap confer a sélective advantage during nitrate-limited growth ? Biochem. J. 344 : 77-84

Quan NT et TD Xuan (2018): Foliar application of vanillic and p-hydroxybenzoic acids enhanced drought tolérance and formation of phytoalexin momilactones in rice, Archives of Agronomy and Soil Science, DOI: 10.1080/03650340.2018.1463520

Recous S et JM Machet. 1999. Short-term immobilisation and crop uptake of fertiliser nitrogen applied to winter wheat: effect of date of application in spring. Plant+Soil 206: 137-149.

Recous, S et B Mary 1990. Microbial immobilization of ammonium and nitrate in cultivated soils. Soil Biol. Biochem. Vol. 22. No. 7. pp. 913-922

Recous, S, D. Robin, D Darwis et B Mary. 1995. Soil inorganic n availability: effect on maize residue décomposition. Soil Biol. Biochem. 27(12) : 1529-1538

Rempelos, L. et al. 2018. Effects of Agronomie Management and Climate on Leaf Phenolic Profiles, Disease Severity, and Grain Yield in Organic and Conventional Wheat Production Systems. J. Agric. Food Chem. XXXX https://pubs.acs.org/action/showCitFormats?doi=10.1021%2Facs.jafc.8b02626

Richardson D, H Felgate, N Watmough, A Thomson et E Baggs. 2009. Mitigating release of the potent greenhouse gas N2O from the nitrogen cycle - could enzymic regulation hold the key?. Trends in Biotechnology 27 No.7 / doi:10.1016/j.tibtech.2009.03.009

Rubio LM et PW Ludden. 2005. Maturation of Nitrogenase: a Biochemical Puzzle. J. Bacteriol. p. 405-414 Vol. 187, No. 2

Sacks LE et HA Barker. 1949. The influence of oxygen on nitrate and nitrite réduction. J. Bac.

Sorger, GJ. 1969. Régulation of Nitrogen Fixation in Azotobacter vinelandii OP: the Rôle of Nitrate Reductase. J. Bacteriol. 98(1) : 56-61

Stewart, BA, LK Porter et FG Viets Jr. 1966. Effect of Sulfur Content of Straws on Rates of Décomposition and Plant Growth SSSAJ Vol. 30 No. 3, p. 355-358 doi:10.2136/sssaj1966.03615995003000030017x

Sullivan DM et JL Havlin. 1992. Soil and Environmental Effects on Urease Inhibition by Ammonium Thiosulfate. SSSAJ 56 : 950-956

Tallec G, J Garnier, G Billen et M Gousailles. 2008. Nitrous oxide émissions from denitrifying activated sludge of urban wastewater treatment plants, under anoxia and low oxygénation. Bioresource Technology 99 : 2200-2209

TKI 2018. N-Sure® - Slow Release Nitrogen Solution. (http://www.cropvitality.com/en/liquid-fertilizers/n-sure%C2%AE)

Wakelin SA, MJ Colloff, PR Harvey, P Marschner, AL Gregg et SL Rogers. 2007. The effects of stubble rétention and nitrogen application on soil microbial community structure and functional gène abundance under irrigated maize. FEMS Microbiol. Ecol. 59 : 661-670

Wang H, C-P Tseng et RP Gunsalus. 1999. The napF and narG Nitrate Reductase Opérons in Escherichia coli Are Differentially Expressed in Response to Submicromolar Concentrations of Nitrate but Not Nitrite. J. Bacteriol. 181 : 5303-5308

Wilcoxson RD. 1980. Effect of fertilizers on slow rusting in wheat. Phytopathology 70:930-2.

Wright DM, GJ. Jordan, WG Lee, RP Duncan, DM Forsyth et DA Coomes. 2010. Do leaves of plants on P-impoverished soils contain high concentrations of phenolic compounds? Func. Ecol. 24: 52-61 / doi: 10.1111/j.1365-2435.2009.01597.x

**Revendications**

1. **Méthode de fertilisation azotobactérienne (AZB) permettant de réduire les émissions telluriques de protoxyde d'azote et d'enrichir en P et en S les résidus de cultures cellulosiques au sol** afin d'en favoriser l'utilisation entant que substrats carbonés en présence de grandes cultures céréalières, de colza et/ou de cultures intermédiaires pièges à nitrates (cipan) implantées après l'enfouissement de ces résidus de culture comprenant des engrais minéraux ou organiques d'N (azote) de P (phosphore) et/ou de S (soufre) soit appliqués pré-récolte aux parties aériennes d'une culture agronomique toujours sur-pieds produisant les résidus de culture cellulosiques laissés au sol, ou encore post-récolte directement auxdits résidus de culture cellulosiques laissés au sol par la susdite culture agronomique, dans laquelle

   • les doses-hectare des engrais N, P et S lorsqu'appliquées pré-récolte aux parties aériennes de la culture agronomique toujours sur-pieds produisant ces résidus de culture cellulosiques laissés au sol post récolte sont supérieures à celles normalement préconisées, et les stades de croissance (BBCH ; échelle du stade de croissance de la culture pour l'application d'engrais au feuillage) au moment de leurs applications plus avancés, que ceux normalement préconisés en fertilisation foliaire associés à des coefficients apparents d'utilisation (CAU ; coefficient apparent d'utilisation indiquant la proportion de l'élément nutritif concerné - N, P ou S, apporté à titre d'engrais et retrouvé dans les grains) optimaux de ces engrais N, P et S,

   et aussi dans laquelle

   • les doses-hectare des engrais N, P et S lorsqu'appliquées directement aux résidus de culture laissés au sol post-récolte de la susdite culture agronomique les produisant sont égales à ou encore jusqu'à 50% plus ou moins importantes par rapport à celles appliquées ci-dessus pré-récolte qu'aux parties aériennes toujours sur-pieds des cultures agronomiques produisant ces résidus de culture

   et plus particulièrement dans laquelle

   • les susdites doses-hectare des susdits engrais minéraux ou organiques d'N de P et/ou de S appliqués pré-récolte aux parties aériennes toujours sur pieds de la culture agronomique produisant et laissant ainsi des résidus de culture cellulosiques au sol *sont supérieures* de 5 à 50%, plus particulièrement de 10 à 33%, voire avantageusement de 25% par rapport à celles normalement préconisées en fertilisation foliaire afin de d'optimiser leurs coefficients apparents d'utilisation (CAU), et
   • que les susdits stades de croissance (BBCH) *sont plus avancés* de 5 à 33%, plus particulièrement de 10 à 25% et avantageusement de 20% par rapport à ceux normalement préconisés en fertilisation foliaire N, P et S afin de d'optimiser leurs coefficients apparents d'utilisation (CAU).

2. **Méthode de fertilisation azotobactérienne (AZB) permettant de réduire les émissions telluriques de protoxyde d'azote et d'enrichir en P et en S les résidus de cultures au sol** selon la première revendication **caractérisée en ce que** les susdits engrais N, P et S ainsi appliqués pré-récolte aux parties aériennes de la culture agronomique toujours sur-pieds produisant lesdits résidus de culture sont soit de simples sels minéraux de N, P et/ou S normalement utilisés en fertilisation foliaire ou encore des engrais N, P et/ou S plus complexes faiblement bactériostatiques à libération lente libérant progressivement l'N, le P et le S minéral sous forme de nitrates, phosphates et sulfates respectivement, et ainsi capables d'alimenter en N, P et S les azotobactéries résidusphériques en proximité desdits résidus de culture cellulosiques au sol après leur enfouissement en surface de sols arables et impliquées dans ladite fertilisation azotobactérienne.

3. **Méthode de fertilisation azotobactérienne (AZB) permettant de réduire les émissions telluriques de protoxyde d'azote et d'enrichir en P et en S les résidus de cultures au sol** selon la première revendication **caractérisée en ce que** les susdits engrais N, P et S ainsi appliqués post-récolte directement aux résidus de culture laissés au sol sont nécessairement plus complexes à libération lente et faiblement bactériostatiques libérant progressivement l'N, le P et le S minéral sous forme de nitrates, phosphates et sulfates respectivement, et ainsi capables d'alimenter en N, P et S les azotobactéries résidusphériques en proximité desdits résidus de culture cellulosiques au sol après leur enfouissement en surface de sols arables et impliquées dans ladite fertilisation azotobactérienne.

4. **Méthode de fertilisation azotobactérienne (AZB) permettant de réduire les émissions telluriques de protoxyde d'azote et d'enrichir en P et en S les résidus de cultures au sol** selon une quelconque des revendications précédentes **caractérisée en ce que** les susdits engrais N, P et S sont composés, respectivement ;

   • de triazones (CAS 7098-14-8) uréiques plus complexes et plus généralement mais qu'en fertilisation foliaire d'azote minéral sous la forme plus simple de nitrate d'ammonium, nitrate de potassium, nitrate de calcium, d'urée et/ou de phosphate d'ammonium,
   • de polyphosphates plus complexes, d'ammonium par exemple (CAS 68333-79-9), et plus généralement mais qu'en fertilisation foliaire de phosphore sous forme plus simple de composés phosphatés solubles à titre d'engrais foliaire tel que des sels phosphatés d'ammonium, de sodium, de potassium et de magnésium,
   • de thiosulfates plus complexes, spécifiquement des sels thiosulfates choisis parmi un groupe comprenant des thiosulfates de calcium (CAS 10124-41-1), de potassium (CAS 1264198-56-2) et/ou de magnésium (CAS 13446-30-5) à l'exclusion notable dans le cas d'applications directement aux résidus de culture cellulosiques laissés au sol du thiosulfate d'ammonium (CAS 7783-18-8), mais aussi plus généralement mais qu'en fertilisation foliaire de simples sels sulfatés de calcium, potassium, magnésium et d'ammonium.

5. **Méthode de fertilisation azotobactérienne (AZB) permettant de réduire les émissions telluriques de protoxyde d'azote et d'enrichir en P et en S les résidus de cultures au sol** selon une quelconque des revendications précédentes **caractérisée en ce que** les doses-hectares normalement préconisées en fertilisation foliaire afin d'optimiser les CAU sont de l'ordre de 5 à 6 unités (kg/ha) d'azote (N), d'au plus 1 unité de phosphore (P) et de 2 à 3 unités de soufre (S) pour ce qui est des sels d'ammonium ($NH_4$) et nitrate ($NO_3$), de phosphate ($PO_4$) et de sulfate ($SO_4$), respectivement, et de l'ordre de 4 unités d'azote (N), d'au plus 1 unités de phosphore (P) et de 2 à 4 unités de soufre (S) pour ce qui est des sels triazones, polyphosphates et thiosulfates, respectivement.

6. **Méthode de fertilisation azotobactérienne (AZB) permettant de réduire les émissions telluriques de protoxyde d'azote et d'enrichir en P et en S les résidus de cultures au sol** selon une quelconque des revendications précédentes **caractérisée en ce que** les stades de croissance BBCH normalement préconisés pour l'application des doses-hectare en fertilisation foliaire sont de l'ordre de 35 à 46, de 23 à 35 et de 23 à 35 pour ce qui est des sels d'ammonium ($NH_4$) et nitrate ($NO_3$), de phosphate ($PO_4$) et de sulfate ($SO_4$), respectivement, et de l'ordre de 23 à 49, de 25 à 39 et de 23 à 37 pour ce qui est des sels triazones, polyphosphates et thiosulfates, respectivement.

7. **Méthode de fertilisation azotobactérienne (AZB) permettant de réduire les émissions telluriques de protoxyde d'azote et d'enrichir en P et en S les résidus de cultures au sol** selon une quelconque des revendications précédentes **caractérisée en ce que** la grande culture agronomique semée à la suite de (suivant) l'enfouissement desdits résidus de culture laissés au sol et bénéficiant ainsi de ladite fertilisation azotobactérienne AZB est choisie parmi un groupe comprenant des cultures d'hivers céréalières, de colza ou de lin, tandis que la cipan est non-Fabaceae.

8. **Méthode de fertilisation azotobactérienne (AZB) permettant de réduire les émissions telluriques de protoxyde d'azote et d'enrichir en P et en S les résidus de cultures au sol** selon une quelconque des revendications précédentes **caractérisée en ce que** la culture agronomique produisant ces résidus de culture cellulosique laissés au sol est choisie parmi un groupe comprenant des cultures céréalières, de colza ou de tournesol ou encore de maïs-grain ou de sorgho.

9. **Indicateur élémentaire de l'efficacité d'une méthode de fertilisation azotobactérienne (AZB)** selon une quelconque des revendications précédentes **caractérisé en ce que** cet indicateur, iDEN, indique l'abondance génomique in situ des opérons NarG (cNarG) impliqués dans la dénitrification anaérobie, NapA (cNapA) impliqué dans la dénitrification aérobie micro-nitrique, et NifH (cNifH) révélateur du niveau de diazotrophie, et cela en fonction de la milimolarité nitrique ($mM-NO_3$) dans la résidusphère par superposition graphique de fonctions cNarG, cNapA et cNifH selon $mM-NO_3$ de manière à mettre en évidence une zone d'intersection stochastique de ces trois dynamiques indiquant le degré d'atténuation relative de cNIF selon $mM-NO_3$ lorsque cNarG est commensurable voir comparable à cNapA.

10. **Indicateur élémentaire de l'efficacité d'une méthode de fertilisation azotobactérienne (AZB)** selon une quelconque des revendications précédentes **caractérisé en ce que** cet indicateur, iHRP, comprend un estimé des teneurs en P (phosphore) et PHE (acides phénoliques) des résidus de culture au sol - Prcs et PHErcs respectivement, iHRP étant la somme des valeurs relatives de Prcs et PHErcs par rapport à leurs maximums ponctuels sur la parcelle agricole en question.

**11. Indicateur élémentaire de l'efficacité d'une méthode de fertilisation azotobactérienne (AZB)** selon une quelconque des revendications précédentes **caractérisé en ce que** cet indicateur, iTHS, comprend une estimation du taux de libération du S phyto-disponible à travers le temps ainsi qu'une estimation du niveau d'expression génomique des complexes enzymatiques impliqués dans le cycle de l'azote résidusphérique et est obtenu par soustraction du produit de la concentration du S phyto-disponible à un moment donné et du niveau d'expression des gènes de l'opéron impliqués dans la biosynthèse du complexe nitrogenase (nifH ; cNIF) de la somme des produits de la concentration du S phyto-disponible au même moment donné et des gènes des opérons narG (cNAR) et napA (cNAR) impliqués respectivement dans la biosynthèse des complexes nitrate réductase membranaire et périplasmique, soit formellement ; $iTHS = \{cNIF * SO4 - (cNAR * SO4 + cNAP * SO4)\}$..

**Patentansprüche**

**1. Verfahren zur Düngung mittels Azotobakterien (AZB) zur Reduktion von Lachgas-Emissionen aus dem Boden und zur Anreicherung von P und S in zellulosehaltigen Kulturrückständen im Boden,** um deren Nutzung als kohlenstoffhaltige Substrate in Gegenwart von Getreidekulturen, Raps und/oder nitratbindenden Zwischenkulturen (CIPAN) zu fördern, die nach der Einbringung dieser Kulturrückstände, die mineralische oder organische Dünger für N (Stickstoff), P (Phosphor) und/oder S (Schwefel) enthalten, gepflanzt werden, angewendet entweder vor der Ernte auf die oberirdischen Teile einer noch auf dem Halm stehenden landwirtschaftlichen Kultur, die die im Boden zurückgelassenen zellulosehaltigen Kulturrückstände erzeugt, oder nach der Ernte, direkt auf die zellulosehaltigen Kulturrückstände, die von der besagten landwirtschaftlichen Kultur im Boden zurückgelassen wurden, wobei:

• die Hektardosen der N-, P- und S-Dünger, wenn sie vor der Ernte auf die oberirdischen Teile der noch auf dem Halm stehenden landwirtschaftlichen Kultur, die diese zellulosehaltigen Kulturrückstände produziert, die nach der Ernte auf dem Boden bleiben, ausgebracht werden, sind höher als die normalerweise empfohlenen Dosen und die Wachstumsstadien (BBCH; Skala des Wachstumsstadiums der Kultur für die Anwendung von Blattdünger) zum Zeitpunkt ihrer Anwendung weiter als die normalerweise für Blattdüngung empfohlenen, verbunden mit optimalen scheinbaren Nutzungskoeffizienten (CAU; scheinbarer Nutzungskoeffizient, der den Anteil des betreffenden Nährstoffs - N, P oder S - angibt, der als Dünger zugeführt und in den Körnern wiedergefunden wird) dieser N-, P- und S-Düngemittel,

und wobei weiterhin:

• die Hektardosen der N-, P- und S- Dünger, wenn sie direkt auf die nach der Ernte auf dem Boden zurückgelassenen Kulturrückstände der oben genannten landwirtschaftlichen Kultur, die sie produziert, angewendet werden, gleich oder bis zu 50 % höher oder niedriger sind als die oben genannten vor der Ernte angewendeten Dosen auf die oberirdischen Teile der noch auf dem Halm stehenden landwirtschaftlichen Kultur, die diese Kulturrückstände produziert

und wobei:

• die oben genannten Hektardosen der oben genannten mineralischen oder organischen N-, P- und/oder S-Düngemittel, die vor der Ernte auf die noch stehenden oberirdischen Teile der produzierenden landwirtschaftlichen Kultur ausgebracht werden und so zellulosehaltige Kulturrückstände auf dem Boden hinterlassen, *höher sind als* 5 bis 50 %, genauer gesagt um 10 bis 33 %, vorzugsweise sogar um 25 % im Vergleich zu den normalerweise für Blattdüngung empfohlenen Dosen, um ihre scheinbaren Nutzungskoeffizienten (CAU) zu optimieren, und
• die oben genannten Wachstumsstadien (BBCH) *um* 5-33 % *weiter* fortgeschritten sind, insbesondere 10-25 % und vorzugsweise 20 % im Vergleich zu denen, die normalerweise für die N-, P- und S-Blattdüngung empfohlen werden, um deren scheinbaren Nutzungskoeffizienten (CAU) zu optimieren.

**2. Verfahren zur Düngung mittels Azotobakterien (AZB) zur Reduktion von Lachgas-Emissionen aus dem Boden und zur Anreicherung von P und S in zellulosehaltigen Kulturrückständen im Boden** gemäß Patentanspruch 1, **dadurch gekennzeichnet, dass** die vorgenannten N-, P- und S-Düngemittel, die vor der Ernte auf die oberirdischen Teile der im Boden liegende Kulturrückstände erzeugenden, noch auf dem Halm stehenden landwirtschaftlichen Kultur angewendet werden, entweder einfache Mineralsalze von N, P und/oder S sind, die normalerweise zur Blattdüngung verwendet werden, oder komplexere, schwach bakteriostatische N-, P- und/oder S-Düngemittel mit langsamer Freisetzung, die das mineralische N, P und S in Form von Nitraten, Phosphaten bzw. Sulfaten allmählich freisetzen und so in der Lage sind, die in der Nähe der zellulosehaltigen Kulturrückstände im Boden nach deren Vergraben auf der Oberfläche von Ackerböden zurückbleibenden und an der Stickstoffbakterien-Düngung beteiligten Azotobakterien mit N, P und S zu versorgen.

3. **Verfahren zur Düngung mittels Azotobakterien (AZB) zur Reduktion von Lachgas-Emissionen aus dem Boden und zur Anreicherung von P und S in zellulosehaltigen Kulturrückständen im Boden,** gemäß Patentanspruch 1, **dadurch gekennzeichnet, dass** die beschriebenen N-, P- und S-Düngemittel, die auf diese Weise nach der Ernte direkt auf die Kulturrückstände im Boden aufgebracht werden, notwendigerweise komplexer, langsam freisetzend und schwach bakteriostatisch sind und das mineralische N, P und S allmählich in Form von von Nitraten, Phosphaten bzw. Sulfaten freisetzen und somit in der Lage sind, die Azotobakterien der Residuensphäre in der Nähe der zellulosehaltigen Kulturrückstände auf dem Boden nach deren Vergraben auf der Oberfläche von Ackerland mit N, P und S zu versorgen, und die an der azotobakteriellen Düngung beteiligt sind.

4. **Verfahren zur Düngung mittels Azotobakterien (AZB) zur Reduktion von Lachgas-Emissionen aus dem Boden und zur Anreicherung von P und S in zellulosehaltigen Kulturrückständen im Boden,** gemäß einem der vorhergehenden Patentansprüche, **dadurch gekennzeichnet, dass** die N-, P- und S-Düngemittel jeweils bestehen aus:

  • komplexeren Harnstofftriazonen (CAS 7098-14-8) und allgemeinen, aber nur zur Blattdüngung mit mineralischem Stickstoff in der einfacheren Form von Ammoniumnitrat, Kaliumnitrat, Kalziumnitrat, Harnstoff und/oder Ammoniumphosphat,
  • komplexeren Polyphosphaten, z. B. Ammonium- (CAS 68333-79-9), und allgemein, aber nur zur Blattdüngung mit Phosphor in einfacherer Form von löslichen Phosphatverbindungen als Blattdünger, wie Phosphatsalze von Ammonium, Natrium, Kalium und Magnesium,
  • komplexeren Thiosulfaten, insbesondere Thiosulfatsalzen, ausgewählt aus der Gruppe bestehend aus Calcium- (CAS 10124-41-1), Kalium- (CAS 1264198-56-2) und/oder Magnesiumthiosulfaten (CAS 13446-30-5), mit der wesentlichen Ausnahme von Ammoniumthiosulfat (CAS 7783-18-8) im Fall der direkten Anwendung auf im Boden verbliebene Zellulosekulturrückstände, aber auch allgemein, jedoch nur zur Blattdüngung, einfache Sulfatsalze von Calcium, Kalium, Magnesium und Ammonium.

5. **Verfahren zur Düngung mittels Azotobakterien (AZB) zur Reduktion von Lachgas-Emissionen aus dem Boden und zur Anreicherung von P und S in zellulosehaltigen Kulturrückständen im Boden,** gemäß einem der vorhergehenden Patentansprüche, **dadurch gekennzeichnet, dass** die normalerweise empfohlenen Hektardosen für Blattdüngung zur Optimierung der CAUs in der Größenordnung von 5 bis 6 Einheiten (kg/ha) Stickstoff (N) liegen, dazu höchstens eine Einheit Phosphor (P) und 2 bis 3 Einheiten Schwefel (S) in Bezug auf Ammonium- ($NH_4$) und Nitratsalze ($NO_3$), Phosphat ($PO_4$) und Sulfat ($SO_4$), und in der Größenordnung von 4 Einheiten Stickstoff (N), höchstens 1 Einheit Phosphor (P) und 2 bis 4 Einheiten Schwefel (S) für Triazon-, Polyphosphat- und Thiosulfat-Salze.

6. **Verfahren zur Düngung mittels Azotobakterien (AZB) zur Reduktion von Lachgas-Emissionen aus dem Boden und zur Anreicherung von P und S in zellulosehaltigen Kulturrückständen im Boden,** gemäß einem der vorhergehenden Patentansprüche, **dadurch gekennzeichnet, dass** die BBCH-Wachstumsstadien, die normalerweise für die Anwendung von Hektardosen bei Blattdüngung empfohlen werden, in der Größenordnung von 35 bis 46 liegen, von 23 bis 35 und von 23 bis 35 jeweils für Ammonium- ($NH_4$) und Nitrat- ($NO_3$), Phosphat- ($PO_4$) und Sulfat-Salze ($SO_4$) sowie von 23 bis 49, von 25 bis 39 und von 23 bis 37 für Triazon-, Polyphosphat- bzw. Thiosulfat-Salze.

7. **Verfahren zur Düngung mittels Azotobakterien (AZB) zur Reduktion von Lachgas-Emissionen aus dem Boden und zur Anreicherung von P und S in zellulosehaltigen Kulturrückständen im Boden,** gemäß einem der vorhergehenden Patentansprüche, **dadurch gekennzeichnet, dass** die landwirtschaftliche Feldfrucht, die nach dem Einackern der Bodenkulturrückstände gesät wird und somit von der Azotobakterien-Düngung (AZB) profitiert, aus einer Gruppe ausgewählt wird, die Getreide-Winterkulturen, Raps oder Leinsaat umfasst, während die Cipan ein Nicht-*Fabaceae* ist.

8. **Verfahren zur Düngung mittels Azotobakterien (AZB) zur Reduktion von Lachgas-Emissionen aus dem Boden und zur Anreicherung von P und S in zellulosehaltigen Kulturrückständen im Boden,** gemäß einem der vorhergehenden Patentansprüche, **dadurch gekennzeichnet, dass** die landwirtschaftliche Kultur, die diese zellulosehaltigen Kulturrückstände im Boden erzeugt, aus einer Gruppe ausgewählt ist, die Getreide, Raps, Sonnenblumen, Körnermais oder Sorghum umfasst.

9. **Elementarer Indikator für die Wirksamkeit einer azotobakteriellen Düngemethode (AZB)** gemäß einem der vorhergehenden Patentansprüche, **dadurch gekennzeichnet, dass** dieser Indikator, iDEN, Folgendes anzeigt: Die genomische Häufigkeit in situ der Operone NarG (cNarG), die an der anaeroben Denitrifikation beteiligt sind, NapA (cNapA), die an der aeroben mikronitrat Denitrifikation beteiligt sind, und NifH (cNifH), die den Grad der Diazotrophie anzeigen, in Abhängigkeit von der Milimolarität von Nitrat (mM-NO3) in der Residuensphäre durch grafische Überlagerung der Funktionen für cNarG, cNapA und cNifH in Abhängigkeit von mM-NO3, um einen stochastischen Schnittbereich dieser drei Dynamiken zu zeigen, der den Grad der relativen Abschwächung von cNIF in Abhängigkeit von anzeigt, wenn cNarG mit cNapA vergleichbar oder sogar gleichwertig ist.

10. **Elementarer Indikator für die Wirksamkeit einer azotobakteriellen Düngemethode (AZB)** gemäß einem der vorhergehenden Patentansprüche, **dadurch gekennzeichnet, dass** dieser Indikator, iHRP, einen Schätzwert der Gehalte an P (Phosphor) und PHE (Phenolsäuren) der Kulturrückstände im Boden - Prcs bzw. PHErcs - umfasst, wobei iHRP die Summe der relativen Werte von Prcs und PHErcs in Bezug auf ihre punktuellen Maxima auf der betreffenden landwirtschaftlichen Parzelle ist.

11. **Elementarer Indikator für die Wirksamkeit einer azotobakteriellen Düngemethode (AZB)** gemäß einem der vorhergehenden Patentansprüche, **dadurch gekennzeichnet, dass** dieser Indikator, iTHS, eine Schätzung der Freisetzungsrate von pflanzenverfügbarem S über die Zeit sowie eine Schätzung des genomischen Expressionsniveaus der Enzymkomplexe umfasst, die am Stickstoffkreislauf der Residuensphäre beteiligt sind, und durch Subtraktion des Produkts von der Konzentration von pflanzenverfügbarem S zu einem gegebenen Zeitpunkt und dem Expressionsniveau der Gene des Operons, die an der Biosynthese des Nitrogenase-Komplexes beteiligt sind (nifH, cNIF) von der Summe der Produkte der Konzentration von phytoverfügbarem S zum selben Zeitpunkt und der Gene der Operone narG (cNAR) und napA (cNAR), die jeweils an der Biosynthese des membranständigen und periplasmatischen Nitratreduktase-Komplexes beteiligt sind, oder als Formel: iTHS = {cNIF * SO4 - (cNAR * SO4 + cNAP * SO4)}.

## Claims

1. - **Azotobacterial fertilization method (AZB) for reducing soil-based emissions of nitrous oxide and enriching soil-borne cellulosic crop residues with P & S** in order to promote their use as carbonaceous substrates in the presence of field cereal crops, rapeseed and/or intermediate nitrate catch-crops (cipan) planted after burial of these crop residues comprising mineral or organic fertilizers of N (nitrogen) of P (phosphorus) and / or S (sulfur) either applied pre-harvest to the aerial parts of an agronomic crop always on feet producing cellulosic soil-borne crop residues, or post-harvest directly to said cellulosic soil-borne crop residues by the aforementioned agronomic crop, wherein;

   • the hectare rates of N, P and S fertilizers when applied pre-harvest to the aerial parts of the agronomic crop still standing producing these cellulosic crop residues left in the ground post-harvest are higher than those normally recommended, and the growth stages (BBCH; scale of the growth stage of the crop for the application of fertilizers to the foliage) at the time of their more advanced applications, than those normally recommended in foliar fertilization associated with apparent coefficients of use (UE; apparent coefficient of use indicating the proportion of the nutrient concerned - N, P or S, applied as fertilizer and found in the grains) optimal of these fertilizers N, P and S,

   and also wherein;

   • the hectare doses of fertilizers N, P and S when applied directly to the soil-borne crop residues post-harvest of the aforementioned agronomic crop producing them are equal to or up to 50% more or less important compared to those applied pre-harvest than to the aerial parts always on feet of agronomic crops producing these crop residues,

and in which;

- the above-mentioned doses-hectare of the aforementioned mineral or organic fertilizers of N of P and / or S applied pre-harvest to the aerial parts still standing of the agronomic crop producing and thus leaving cellulosic crop residues in the soil *are higher* from 5 to 50%, more particularly from 10 to 33%, or preferably 25% compared to those normally recommended in foliar fertilization in order to optimize their apparent coefficients of use (UE), and
- that the aforementioned growth stages (BBCH) *are more advanced* from 5 to 33%, more particularly from 10 to 25% and preferably 20% compared to those normally recommended in foliar fertilization N, P and S in order to optimize their apparent coefficients of use (UE).

2. - **Azotobacterial fertilization method (AZB) for reducing soil-based emissions of nitrous oxide and enriching soil-borne cellulosic crop residues with P & S** soil crop residues in P and S according to the first claim **characterized in that** the aforementioned fertilizers N, P and S thus applied pre-harvest to the aerial parts of the agronomic crop always on feet producing said crop residues are either simple mineral salts of N, P and / or S normally used in foliar fertilization or fertilizers N, P and / or S more complex weakly bacteriostatic slow-release gradually releasing the mineral N, P and S in the form of nitrates, phosphates and sulfates respectively, and thus capable of feeding N, P and S to residuspheric azotobacteria near the said cellulosic crop residues to the soil after their burial in the upper strata of arable soils and involved in the said azotobacterial fertilization.

3. - **Azotobacterial fertilization method (AZB) for reducing soil-based emissions of nitrous oxide and enriching soil-borne cellulosic crop residues with P & S** according to the first characterized claim in that the aforementioned fertilizers N, P and S thus applied post-harvest directly to soil-borne crop residues are necessarily more complex slow release and weakly bacteriostatic gradually releasing N, mineral P and S in the form of nitrates, phosphates and sulfates respectively, and thus capable of supplying N, P and S to the residuspheric azotobacteria in proximity to said cellulosic crop residues in the soil after their burial in the upper strata of arable soils and involved in said azotobacterial fertilization.

4. - **Azotobacterial fertilization method (AZB) for reducing soil-based emissions of nitrous oxide and enriching soil-borne cellulosic crop residues with P & S** according to any of the preceding claims **characterized in that** the aforementioned fertilizers N, P and S are composed, respectively;

- triazones (CAS 7098-14-8) urea more complex and more generally but only for foliar fertilization of mineral nitrogen in the simpler form of ammonium nitrate, potassium nitrate, calcium nitrate, urea and/or ammonium phosphate,
- more complex polyphosphates, e.g. ammonium (CAS 68333-79-9), and more generally but only for foliar phosphorus fertilization in the simpler form of soluble phosphate compounds as foliar fertilizer such as phosphate salts of ammonium, sodium, potassium and magnesium,
- more complex thiosulphates, specifically thiosulphates selected from a group comprising calcium (CAS 10124-41-1), potassium (CAS 1264198-56-2) and/or magnesium (CAS 13446-30-5) thiosulphates, with the notable exception of, for applications directly to cellulosic soil-borne crop residues, of ammonium thiosulphate (CAS 7783-18-8), but also more generally but only in foliar fertilization of simple sulfate salts of calcium, potassium, magnesium & ammonium.

5. - **Azotobacterial fertilization method (AZB) for reducing soil-based emissions of nitrous oxide and enriching soil-borne cellulosic crop residues with P & S** in the soil according to any of the preceding claims **characterized in that** the doses-hectares normally recommended in foliar fertilization to optimize the UE are of the order of 5 to 6 units (kg/ha) of nitrogen (N), not more than 1 phosphorus (P) unit and 2 to 3 sulfur (S) units in the case of ammonium (NH4) and nitrate (NO3), phosphate (PO4) and sulphate (SO4) salts, respectively, and in the order of 4 nitrogen (N) units, not more than 1 phosphorus (P) unit and 2 to 4 sulfur (S) in the case of triazone salts, polyphosphates and thiosulfates, respectively.

6. - **Azotobacterial fertilization method (AZB) for reducing soil-based emissions of nitrous oxide and enriching soil-borne cellulosic crop residues with P & S** according to any of the preceding claims **characterized in that** the BBCH growth stages normally recommended for the application of doses-hectare in foliar fertilization are of the order of 35 to 46, 23-35 and 23-35 for ammonium (NH4) and nitrate (NO3), phosphate (PO4) and sulphate (SO4) salts, respectively, and 23-49, 25-39 and 23-37 for triazone, polyphosphate and thiosulphate salts, respectively.

**7.** - **Azotobacterial fertilization method (AZB) for reducing soil-based emissions of nitrous oxide and enriching soil-borne cellulosic crop residues with P & S** according to any of the preceding claims **characterized in that** the field-crop sown as a result of (following) the burial of said soil-borne crop residues and thus benefiting from said azotobacterial fertilization AZB is selected from a group comprising crops of winter cereals, rapeseed or flax, while cipan is *non-Fabaceae.*

**8.** - **Azotobacterial fertilization method (AZB) for reducing soil-based emissions of nitrous oxide and enriching soil-borne cellulosic crop residues with P & S** according to any of the preceding claims **characterized in that** the agronomic crop producing these cellulosic soil-borne crop residues is selected from a group comprising cereal crops, rapeseed or sunflower or grain maize or sorghum.

**9.** - **Basic indicator of the effectiveness of an azotobacterial fertilization method (AZB)** according to any of the preceding claims **characterized in that** this indicator, iDEN, indicates the in situ genomic abundance of NarG operons (cNarG) involved in anaerobic denitrification, NapA (cNapA) involved in micronitric aerobic denitrification, and NifH (cNifH) indicative of the level of diazotrophy, and this as a function of nitric milimolarity (mM-NO3) in the residusphere by graphical superposition of functions cNarG, cNapA and cNifH according to so as to highlight a stochastic intersection zone of these three dynamics indicating the degree of relative attenuation of cNIF according to when cNarG is commensurable or comparable to cNapA.

**10.** - **Basic indicator of the effectiveness of an azotobacterial fertilization method (AZB)** according to any of the preceding claims **characterized in that** this indicator, iHRP, comprises an estimate of the contents of P (phosphorus) and PHE (phenolic acids) of soil crop residues - Prcs and PHErcs respectively, iHRP being the sum of the relative values of Prcs and PHErcs with respect to their point maximums on the agricultural plot in question.

**11.** - **Basic indicator of the effectiveness of an azotobacterial fertilization method (AZB)** according to any of the preceding claims **characterized in that** this indicator, iTHS, comprises an estimate of the rate of release of plant-available S over time as well as an estimate of the genomic expression level of enzyme complexes involved in the residuspheric nitrogen metabolism and is obtained by subtracting the product from the concentration of S plant-available at a given time and the level of expression of the operon genes involved in the biosynthesis of the nitrogenase complex (nifH; cNIF) of the sum of the products of the concentration of the plant-available S at the same given time and the genes of the narG (cNAR) and napA (cNAR) operons involved respectively in the biosynthesis of membrane-bound nitrate reductase and periplasmic complexes, either formally; $iTHS = . \{cNIF * SO4 - (cNAR * SO4 + cNAP * SO4)\}$.

[Fig. 1]

Augmentation attribuable à la libération NPS d'engrais appliqués aux RCS

Dynamique des besoins NPS des bactéries du sol

Temps écoulé post - enfouissement des RC →

Augmentation attribuable à la libération lente NPS d'engrais appliqués aux résidus de culture

Dynamique des besoins NPS des azotobactéries

Temps écoulé post - enfouissement des RC →

[Fig. 2]

[Fig. 3]

[Fig. 4]

[Fig. 5]

[Fig. 6]

iTHS :: SO4 _sulfates

$y = -2.0596x + 0.2092$
$R^2 = 0.9109$

SO4 :: dS(SO4) mM

iTHS :: SO4 _thiosulfates

$y = 1.6657x - 0.1301$
$R^2 = 0.9906$

SO4 :: dS(S2O3) mM

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 3335536 A, Claude et Fillion
- EP 3120680 A
- EP 3417691 A
- US 5755058 A
- EP 2223586 A

### Littérature non-brevet citée dans la description

- *CHEMICAL ABSTRACTS,* 7098-14-8
- *CHEMICAL ABSTRACTS,* 68333-79-9
- *CHEMICAL ABSTRACTS,* 10124-41-1
- *CHEMICAL ABSTRACTS,* 1264198-56-2
- *CHEMICAL ABSTRACTS,* 13446-30-5
- *CHEMICAL ABSTRACTS,* 7783-18-8
- **ASSENG SF et al.** Uncertainty in Simulating Wheat Yields under Climate Change. *Nature Climate Change,* 2013, vol. 3, 827-32, http://dx.doi.org/10.1038/nclimate1916
- **ASSENG SF et al.** Benchmark data set for wheat growth models: field experiments and AgMIP multi-model simulations. *Open Data J. Agric. Res,* 2015, vol. 1, 1-5
- **BARÈL D.** Foliar application of phosphorus compounds. *Rétrospective Theses and Dissertations,* 1975, 5455, https://lib.dr.iastate.edu/rtd/5455
- **BARROW, NJ.** A comparison of the mineralization of nitrogen and of sulphur from decomposing organic materials. *Australian Journal of Agricultural Research,* 1960, vol. 11 (6), 960-969, http://www.publish.csiro.au/cp/AR9600960
- **BROTONEGRO, S.** Nitrogen fixation and nitrogenase activity of Azotobacter chroococcum. *Thesis of S. Brotonegoro, Wageningen,* 13 Juin 1974
- **CADOT, S ; G BÉLANGER ; N ZIADI ; CH. MOREL ; S SINAJ.** Critical plant and soil phosphorus for wheat, maize, and rapeseed after 44 years of P fertilization. *Nutr Cycl Agroecosyst,* 2018, https://doi.org/10.1007/s10705-018-9956-0
- **CANELLAS LP ; FL OLIVARES.** Physiological responses to humic substances as plant growth promoter. *Chemical and Biological Technologies in Agriculture 2014,* 2014, vol. 1, 3
- **CHÈNEBY D ; A BRAUMAN ; B RABARY ; L PHILIPPOT.** Differential Responses of Nitrate Reducer Community Size, Structure, and Activity to Tillage Systems. *Appl. Environ. Microbiol,* 2009, vol. 75, 3180-86
- **CHÈNEBY D ; D. BRU ; N. PASCAULT ; P. A. MARON ; L. RANJARD ; L. PHILIPPOT.** Rôle of Plant Residues in Determining Temporal Patterns of the Activity, Size, and Structure of Nitrate Reducer Communities in Soil. *Appl. Environ. Microbiol,* 2010, vol. 76, 7136-7143
- **CLAPP JG.** Urea-Triazone N Characteristics and Uses. Research Article / Optimizing Nitrogen Management in Food and Energy Production and Environmental Protection. *Proceedings of the 2nd International Nitrogen Conférence on Science and Policy / The Scientific World,* 2001, vol. 1 (S2), 103-107
- **CLAUDE PP ; L FILLION.** Effet de l'apport d'un inoculum bactérien aux résidus de culture de maïs-grain au sol sur le rendement et la qualité de blés d'hiver panifiables en France. *Agrosolutions,* 2004, vol. 15 (1), 23-29
- **COLLOFF MJ ; SA WAKELIN ; D GOMEZ ; SL ROGERS.** Détection of nitrogen cycle gènes in soils for measuring the effects of changes in land use and management. *Soil Biology & Biochemistry,* 2008, vol. 40 (2008), 1637-1645
- **DEL GROSSO SJ ; WJ PARTON ; AR MOSIER ; DS OJIMA ; AE KULMALA ; S PHONGPAN.** General model for N2O and N2 gas émissions from soils due to dentrification. *Global Biogeochemical Cycles,* 2000, vol. 14, 1045-1060
- **DELFINE S ; R TOGNETTI ; E DESIDERIO ; A ALVINO.** Effect of foliar application of N and numic acids on growth and yield of durum wheat. *Agron. Sustain. Dev,* 2005, vol. 25, 183-191
- **DJURDJEVIC I ; O EINSLE ; L DECAMPS.** Nitrogenase Cofactor: Inspiration for Model Chemistry. *Chem. Asian J.,* 2017, vol. 2017 (12), 1447-1455
- **DOS SANTOS PC ; DC JOHNSON ; BE RAGLE ; M-C UNCIULEAC ; DR DEAN.** Controlled Expression of nif and isc Iron-Sulfur Protein Maturation Components Reveals Target Specificity and Limited Functional Replacement between the Two Systems. *J. Bacteriol,* 2007, vol. 189, 2854-2862

- **EBRAHIMI, A. ; D. OR.** Hydration and diffusion processes shape microbial community organization and function in model soil aggregates. *Water Resour. Res.,* 2015, vol. 51
- **ERIKSEN, J.** Gross sulphur minéralisation-immobilisation turnover in soil amended with plant residues. *Soil Biology and Biochemistry,* 2005, vol. 37 (12), 2216-2224
- **FANG, QX ; L MA ; AD HALVORSON ; RW MALONE ; LR AHUJA ; SJ DEL GROSSO ; JL HATFIELD.** Evaluating four nitrous oxide émission algorithms in response to N rate on an irrigated corn field. Environ. *Mod. Software,* 2015, vol. 72, 56-70
- **FAZZOLARI E ; B NICOLARDOT ; J-C GERMON.** Simultaneous effects of increasing levels of glucose and oxygen partial pressures on dénitrification and dissimilatory nitrate réduction to ammonium in repacked soil cores. *Eur. J. Soil Hot,* 1998, vol. 34 (I), 47-52, 0
- **FIRESTONE, M. K. ; M. S. SMITH ; R. B. FIRESTONE ; J. M. TIEDIE.** The influence of nitrate, nitrite, and oxygen on the composition o! the gaseous products of dénitrification in soil. *Soil Sci. Soc. Am. J.,* 1979, vol. 43, 1140-1144
- **GIRMA, K ; MARTIN, KL ; FREEMAN, KW ; MOSALI, J ; TEAL, RK ; RAUN, WILLIAM. R ; MOGES, S.M ; ARNALL, D. B.** Determination of Optimum Rate and Growth Stage for Foliar-Applied Phosphorus in Corn. *Comm. Soil Sci. Plant Anal.,* 2007, vol. 38 (9), 1137-1154
- **GOOS, RJ ; BE JOHNSON.** Thiosulfate oxidation by three soils as influenced by température. *Communications in Soil Science and Plant Analysis,* 2001, vol. 32 (17-18), 2841-2849
- **GRANT CA ; S JIA ; KR BROWN ; LD BAILEY.** Volatile losses of NH3 from surface-applied urea and urea ammonium nitrate with and without the urease inhibitors NBPT or ammonium thiosulphate. *Can. J. Soil Sci.,* 1996, vol. 76, 417-419
- **HARTMANN, A ; RH BURRIS.** Régulation of Nitrogenase Activity by Oxygen in Azospirillum brasilense and Azospirillum lipoferum. *J. Bacteriol,* 1987, vol. 169 (3), 944-948
- **HE, Y ; DR PRESLEY ; J TATARKO ; LIQUID N.** S fertilizer solutions effects on the mass, chemical, and shear strength properties of winter wheat (T. aestivum) residue. *Trans. ASABE,* vol. 60, 671-682
- **HUSSAIN M ; MA MALIK ; M. FAROOQ ; MY ASHRAF ; MA CHEEMA.** Improving Drought Tolérance by Exogenous Application of Glycinebetaine and Salicylic Acid in Sunflower. *J. Agronomy & Crop Science,* 2008, ISSN 0931-2250
- **IMAN RL ; JM DAVENPORT.** An itérative algorithm to produce a positive definite corrélation matrix from an approximate corrélation matrix. *Sandia Report Sand81 - 1376. Sandia National Laboratory, Albuquerque NM,* 1982, vol. 87, 185
- **IMAN, RL ; WJ CONOVER.** A distribution-free approach to inducing rank corrélation among input variables. *Commun. Stat. Simul. Comput,* 1982, vol. 11 (3), 311-334
- **JANZEN HH ; R BETTANY.** Release of available sulphur from fertilizers. *Can. J. Soil Sci,* 1986, vol. 66, 91-103
- **JI, B ; K YANG ; L ZHU ; Y JIANG ; H WANG ; J ZHOU ; H ZHANG.** Aérobic Dénitrification: A Review of important Advances of the Last 30 Years. *Biotechnology and Bioprocess Engineering,* 2015, vol. 20, 643-651
- **JONES CG ; SE HARTLEY.** A Protein Compétition Model of Phenolic Allocation. *Oikos,* 1999, vol. 86 (1), 27-44, http://www.jstor.org/stable/3546567
- **JUSZCZUK IM ; A WIKTOROWSKA ; E MALUSA ; AM RYCHTER.** Changes in the concentration of phenolic compounds and exudation induced by phosphate deficiency in bean plants (Phaseolus vulgaris L.). *Plant and Soil,* 2004, vol. 267, 41-49
- **KALININSKAYA, TA.** The Influence of Différent Forms of Combined Nitrogen on Nitrogen-Fixing Activity of Azospirilla in the Rhizosphere of Rice Plants. *Dev. Soil Sci,* 1989, vol. 18, 283-286
- **KANDELER, E ; TH. BRUNE ; E ENOWASHU ; N DÔRR ; G GUGGENBERGER ; N LAMERSDORF ; L PHILIPPOT.** Response of total and nitrate-dissimilating bacteria to reduced déposition ina spruce forest soil profile. *FEMS Microbiol Ecol,* 2009, vol. 67, 444-454
- **LLOYD, D.** Aérobic Dénitrification in Soils and Sédiments: from Fallacies to Facts. *TREE,* Octobre 1993, vol. 8 (10
- **MAILLARD A ; DIQUÉLOU S ; BILLARD V ; LAÎNÉ P ; GARNICA M ; PRUDENT M ; GARCIA-MINA J-M ; YVIN J-C ; OURRY A.** Leaf minerai nutrient remobilization during leaf senescence and modulation by nutrient deficiency. *Front. Plant Sci,* 2015, vol. 6, 317
- **MARSHALL, C ; LF WARDLAW.** A comparative study of the distribution and speed of movement of C assimilates and foliar applied P labelled P in wheat. *Aust. J. Biol. Sci.,* 1973, vol. 26, 1-13
- **MCCARTY GW ; JM BREMNER ; MJ KROGMEIER.** Evaluation of ammonium thiosulfate as a soil urease. *Fertilizer research,* Septembre 1990, vol. 24 (3), 135-139, https://link.springer.com/article/10.1007/BF01073581
- **MCGILL WB ; CV COLE.** Comparative Aspects of Cycling of Organic C, N, S and P Through Soil Organic Matter. *Geoderma,* 1981, vol. 26 (1981), 267-286
- **MOSALI, J. et al.** Effect of Foliar Application of Phosphorus on Winter Wheat Grain Yield, Phosphorus Uptake, and Use Efficiency. *Journal of Plant Nutrition,* 2006, vol. 29, 2147-2163

- **NIKNAHAD-GHARMAKHER, H ; S PIUTTI ; J-M MACHET ; E. BENIZRI ; S. RECOUS.** Mineralization-immobilization of sulphur in a soit during décomposition of plant residues of varied chemical composition and S content. *Plant&Soil,* 2012, vol. 360, 391-404
- **NOACK SR ; TM MCBEATH ; MJ MCLAUGHLIN.** *Potential for foliar phosphorus fertilisation of dryland cereal crops: a review Crop and Pasture Science,* 2010, vol. 61 (8), 659-669
- **OH J ; J SILVERSTEIN.** Oxygen inhibition of activated sludge dénitrification. *Wat. Res,* 1999, vol. 33 (8), 1925-1937
- **PEIRCE, C ; E FACELLI T MCBEATH ; V FERNÁNDEZ ; M MCLAUGHLIN.** Leaf Wetting and Uptake of Fluid Foliar P Fertilizers for Wheat. *Grains research & development corp. Australia,* 2014
- Foliar fertilization of wheat plants with phosphorus. **PEIRCE, C.** Ph.D. thesis. University of Adelaide (Australia), Novembre 2015
- **PHILIPPOT L ; O. HOJBERG.** Dissimilatory nitrate reductases in bacteria. *Biochimica et Biophysica Acta,* 1999, vol. 1446, 1-23
- **PHILIPPOT L ; S HALLIN.** Finding the missing link between diversity + activity using denitrifying bacteria as a model functional community. *Curr. Op. Microbiol,* 2005, vol. 8, 234-9
- **PHILIPPOT L ; S PIUTTI ; F MARTIN-LAURENT ; S HALLET ; J-C GERMON.** Molecular Analysis of the Nitrate-Reducing Community from Unplanted and Maize-Planted Soils. *Appl. Environ. Microbiol,* 2002, vol. 68 (12), 6121-6128
- **POTTER LC ; P MILLINGTON ; L GRIFFITHS ; GH THOMAS ; JA COLE.** Compétition between Escherichia coli strains expressing either a periplasmic or a membrane-bound nitrate reductase : does Nap confer a sélective advantage during nitrate-limited growth ?. *Biochem. J.,* 1999, vol. 344, 77-84
- **QUAN NT ; TD XUAN.** Foliar application of vanillic and p-hydroxybenzoic acids enhanced drought tolérance and formation of phytoalexin momilactones in rice. *Archives of Agronomy and Soil Science,* 2018
- **RECOUS S ; JM MACHET.** Short-term immobilisation and crop uptake of fertiliser nitrogen applied to winter wheat: effect of date of application in spring. *Plant+Soil,* 1999, vol. 206, 137-149
- **RECOUS, S ; B MARY.** Microbial immobilization of ammonium and nitrate in cultivated soils. *Soil Biol. Biochem.,* 1990, vol. 22 (7), 913-922
- **RECOUS, S, D ; ROBIN, D DARWIS ; B MARY.** Soil inorganic n availability: effect on maize residue décomposition. *Soil Biol. Biochem.,* 1995, vol. 27 (12), 1529-1538
- **REMPELOS, L. et al.** Effects of Agronomie Management and Climate on Leaf Phenolic Profiles, Disease Severity, and Grain Yield in Organic and Conventional Wheat Production Systems. *J. Agric. Food Chem. XXXX,* 2018, https://pubs.acs.org/action/showCitFormats?doi=10.1021%2Facs.jafc.8b02626
- **RICHARDSON D ; H FELGATE ; N WATMOUGH ; A THOMSON ; E BAGGS.** Mitigating release of the potent greenhouse gas N2O from the nitrogen cycle - could enzymic regulation hold the key?. *Trends in Biotechnology,* 2009, vol. 27 (7
- **RUBIO LM ; PW LUDDEN.** Maturation of Nitrogenase: a Biochemical Puzzle. *J. Bacteriol,* 2005, vol. 187 (2), 405-414
- **SACKS LE ; HA BARKER.** The influence of oxygen on nitrate and nitrite réduction. *J. Bac,* 1949
- **SORGER, GJ.** Régulation of Nitrogen Fixation in Azotobacter vinelandii OP: the Rôle of Nitrate Reductase. *J. Bacteriol,* 1969, vol. 98 (1), 56-61
- **STEWART, BA ; LK PORTER ; FG VIETS JR.** *Effect of Sulfur Content of Straws on Rates of Décomposition and Plant Growth SSSAJ,* 1966, vol. 30 (3), 355-358
- **SULLIVAN DM ; JL HAVLIN.** Soil and Environmental Effects on Urease Inhibition by Ammonium Thiosulfate. *SSSAJ,* 1992, vol. 56, 950-956
- **TALLEC G ; J GARNIER ; G BILLEN ; M GOUSAILLES.** Nitrous oxide émissions from denitrifying activated sludge of urban wastewater treatment plants, under anoxia and low oxygénation. *Bioresource Technology,* 2008, vol. 99, 2200-2209
- **TKI.** *N-Sure® - Slow Release Nitrogen Solution,* 2018, http://www.cropvitality.com/en/liquid-fertilizers/n-sure%C2%AE
- **WAKELIN SA ; MJ COLLOFF ; PR HARVEY ; P MARSCHNER ; AL GREGG ; SL ROGERS.** The effects of stubble rétention and nitrogen application on soil microbial community structure and functional gène abundance under irrigated maize. *FEMS Microbiol. Ecol,* 2007, vol. 59, 661-670
- **WANG H ; C-P TSENG ; RP GUNSALUS.** The napF and narG Nitrate Reductase Opérons in Escherichia coli Are Differentially Expressed in Response to Submicromolar Concentrations of Nitrate but Not Nitrite. *J. Bacteriol,* 1999, vol. 181, 5303-5308
- **WILCOXSON RD.** Effect of fertilizers on slow rusting in wheat. *Phytopathology,* 1980, vol. 70, 930-2
- **WRIGHT DM ; GJ. JORDAN ; WG LEE ; RP DUNCAN ; DM FORSYTH ; DA COOMES.** Do leaves of plants on P-impoverished soils contain high concentrations of phenolic compounds?. *Func. Ecol,* 2010, vol. 24, 52-61